(19) Europäisches Patentamt
European Patent Office
Office européen des brevets

(11) **EP 1 825 291 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(21) Anmeldenummer: **05850260.0**

(22) Anmeldetag: **13.12.2005**

(51) Int Cl.:
**G01S 5/02** *(2006.01)*

(86) Internationale Anmeldenummer:
**PCT/EP2005/013365**

(87) Internationale Veröffentlichungsnummer:
**WO 2006/063790 (22.06.2006 Gazette 2006/25)**

(54) **EMPFANGSVORRICHTUNG UND VERFAHREN ZUM EMPFANGEN EINER EMPFANGSFOLGE**

RECEIVING DEVICE AND METHOD FOR RECEIVING A RECEIVE SEQUENCE

DISPOSITIF DE RECEPTION ET PROCEDE POUR RECEVOIR UNE SEQUENCE DE RECEPTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059957**

(43) Veröffentlichungstag der Anmeldung:
**29.08.2007 Patentblatt 2007/35**

(73) Patentinhaber: **Fraunhofer-Gesellschaft zur Förderung der angewandten Forschung e.V.
80686 München (DE)**

(72) Erfinder: **EBERLEIN, Ernst
91091 Grossen-Seebach (DE)**

(74) Vertreter: **Reitzle, Helmut et al
Pfenning, Meinig & Partner GbR
Patent- und Rechtsanwälte
Theresienhöhe 13
80339 München (DE)**

(56) Entgegenhaltungen:
**US-A- 6 009 334 US-A1- 2003 128 161
US-A1- 2003 227 895 US-A1- 2004 072 579**

- **LI X ET AL: "SUPER-RESOLUTION TOA ESTIMATION WITH DIVERSITY FOR INDOOR GEOLOCATION" IEEE TRANSACTIONS ON WIRELESS COMMUNICATIONS, IEEE SERVICE CENTER, PISCATAWAY, NJ, US, Bd. 3, Nr. 1, Januar 2004 (2004-01), Seiten 224-234, XP001046543 ISSN: 1536-1276**

**Beschreibung**

Die vorliegende Erfindung befasst sich mit einer Empfangsvorrichtung und einem Verfahren zum Empfangen sowie einer Kommunikationsvorrichtung mit einer Sendervorrichtung und einer Empfangsvorrichtung, die insbesondere in digitalen Kommunikationssystemen, sowie Ortungssystemen zur Bestimmung eines Senderstandortes oder zur Bestimmung eines Eintreffzeitpunktes einer Empfangsfolge in einem Empfänger eingesetzt werden können.

Damit sich ein Empfänger in einem digitalen Übertragungssystem auf ein, von einem Sender ausgesendetes digitales Signal aufsynchronisieren kann, strahlt der Sender ein digitales Signal aus, das dem Empfänger bekannt ist. Die Aufgabe des Empfängers liegt darin, den genauen Eintreffzeitpunkt TOA (TOA; TOA = Time of Arrival) des gesendeten Signals zu bestimmen.

Um den Eintreffzeitpunkt zu bestimmen, wird die Kreuzkorrelierte zwischen dem digitalen Empfangssignal und dem bekannten digitalen Sendesignal berechnet.

In Ortungssystemen strahlt ein Sender ebenfalls ein digitales Signal aus, das von mehreren Empfängern empfangen wird. Aus den Eintreffzeitpunkten des Signals bei den Empfängern kann über eine Laufzeitmessung die Position des Senders bestimmt werden.

Insbesondere auf grund von Mehrwegeausbreitung kann der Eintreffzeitpunkt eines Signals nur ungenau bestimmt werden. Dies führt beispielsweise bei Kommunikationssystemen zu Synchronisationsfehlern oder bei Ortungssystemen zu einer fehlerhaften Standortbestimmung.

Gemäß US 2003/0128161 A1 wird der Standort eines Mobilgerätes bestimmt, indem das Mobilgerät ein einziges Signal aussendet, das von einer Mehrzahl von Empfängern empfangen wird. Jeder Empfänger bestimmt den Eintreffzeitpunkt des Signals und übermittelt diese zu einem Lokalisierungszentrum. Es werden nicht unterschiedliche, zu übertragende Sendefolgen zur Standortbestimmung verwendet.

US 6,009,334 beschreibt eine Möglichkeit über eine Zeitmessung eine Distanz zwischen einem Sender und einem Empfänger zu ermitteln. Dazu sendet der Sender eine Anzahl von Bursts aus, die von einem Empfänger empfangen werden. Daraus wird ein resultierender Eintreffzeitpunkt ermittelt, der die Distanz zwischen Sender und Empfänger bestimmt.

LI X ET AL:"Super-Resolution TOA Estimation with Diversity for Indoor Geolocation" IEEE Transactions on Wireless Communications, IEEE Service Center, Piscataway, NJ, US, Bd. 3, Nr. 1, Januar 2004 (2004-01), Seiten 224-234, XP001046543 ISSN: 1536-1276 beschäftigt sich mit der Bestimmung eines Eintreffzeitpunktes einer Empfangsfolge mit Hilfe von Diversitätstechniken.

US 2003/227895 A1 befasst sich mit einem verbesserten Verfahren zur Bestimmung des Eintreffzeitpunktes basierend auf der Verwendung von speziellen Impulsantworten.

US 2004/072579 A1 beschreibt eine Möglichkeit zur Standortbestimmung eines Senders, in dem aus empfangenen Signalen eine räumliche Signatur gebildet wird, aus der Informationen über einen Standort des Senders abgeleitet werden.

Es ist die Aufgabe der vorliegenden Erfindung, eine Vorrichtung und ein Verfahren zu schaffen, die eine verbesserte Auswertemöglichkeit von Empfangsfolgen ermöglichen.

Diese Aufgabe wird durch eine Empfangsvorrichtung gemäß Anspruch 1, ein Kommunikationssystem gemäß Anspruch 17, ein Verfahren gemäß Anspruch 20 sowie ein Computerprogramm gemäß Anspruch 21 gelöst.

Die vorliegende Erfindung schafft eine Empfangsvorrichtung zum Bestimmen eines Standortes einer Sendervorrichtung, mit folgenden Merkmalen:

einer Auswerteeinrichtung, die ausgebildet ist, um aus einem Eintreffzeitpunkt einer ersten Empfangsfolge einen ersten Standort der Sendervorrichtung und aus einem Eintreffzeitpunkt einer zweiten Empfangsfolge einen zweiten Standort der Sendervorrichtung zu bestimmen, wobei die Empfangsfolgen übertragenen Sendefolgen der Sendervorrichtung entsprechen; und

einem Kombinierer, der ausgebildet ist, um den Standort der Sendervorrichtung aus dem ersten Standort und dem zweiten Standort zu bestimmen.

Die vorliegende Erfindung schafft ferner ein Verfahren zum Bestimmen eines Standortes einer Sendervorrichtung das folgende Schritte aufweist:

Empfangen eines ersten Eintreffzeitpunktes einer ersten Empfangsfolge und eines zweiten Eintreffzeitpunktes einer zweiten Empfangsfolge, wobei die Empfangsfolgen übertragenen Sendefolgen der Sendevorrichtung entsprechen;
Bestimmen eines ersten Standorts der Sendervorrichtung aus dem Eintreffzeitpunkt der ersten Empfangsfolge und eines zweiten Standorts der Sendervorrichtung aus dem Eintreffzeitpunkt der zweiten Empfangsfolge; und

Bestimmen des Standortes der Sendervorrichtung aus dem ersten und dem zweiten Standort.

Der Erfindung schafft ferner eine Empfangseinrichtung, mit folgenden Merkmalen:

einem Empfänger, der ausgebildet ist, um eine erste Empfangsfolge und eine zweite Empfangsfolge zu empfangen, wobei jede der Empfangsfolgen eine Mehrzahl aufeinanderfolgender Werte aufweist und wobei sich die aufeinanderfolgenden Werte der ersten Empfangsfolge von den aufeinanderfolgenden Werten der zweiten Empfangsfolge unterscheiden;

einem Korrelator, der ausgebildet ist, um einen ersten Eintreffzeitpunkt der ersten Empfangsfolge und einen zweiten Eintreffzeitpunkt der zweiten Empfangsfolge zu bestimmen; und

eine Kombinationseinrichtung, die ausgebildet ist, um einen gemittelten Eintreffzeitpunkt aus dem ersten und zweiten Eintreffzeitpunkt zu bestimmen.

Die erfindungsgemäße Empfangsvorrichtung sowie das erfindungsgemäße Empfangsverfahren können vorteilhafterweise in einem Empfängersystem zum Bestimmen eines Standortes einer Sendevorrichtung sowie in einem Kommunikationssystem eingesetzt werden.

Wenn der Sender einen Burst über eine Antenne ausstrahlt, dann führt das in der Regel durch Mehrwege-Ausbreitung zu einem systematischen Fehler bei der Schätzung des Eintreffzeitpunktes des Bursts im Empfänger. Der Fehler hängt dabei vom Ort des Senders, der Ausrichtung seiner Antenne und dem verwendeten Burst ab.

Da die Mehrwege-Ausbreitung zu einem frequenzselektiven Kanal führt, hängt der geschätzte und fehlerhafte Eintreffzeitpunkt tatsächlich auch vom verwendeten Burst ab. Wird ein anderer Burst mit anderen spektralen Eigenschaften übertragen, dann ändert sich auch der systematische Eintreffzeitpunkt-Fehler. Ebenso ändert sich dieser Fehler, wenn anstatt einer ersten Sendeantenne eine andere Sendeantenne verwendet wird, da dann eine andere Mehrwegausbreitung erfolgt, d. h. ein anderer Übertragungskanal genutzt wird.

Dies ergibt sich daraus, dass, abhängig davon, wohin die Sendeantenne ihre Hauptkeule der Richtcharakteristik gerade ausgerichtet hat, mal mehr und mal weniger Mehrwege-Phänomene auftreten.

Der vorliegenden Erfindung liegt die Erkenntnis zugrunde, dass ein Einfluss der Mehrwege-Ausbreitung bei der Bestimmung des Eintreffzeitpunktes einer Empfangsfolge statistisch verringert werden kann, indem im Sender mehr als ein Sendesignal, im Folgenden auch Burst genannt, verwendet wird, wobei die verwendeten Sendesignale durch ein vorgegebenes Multiplex-Schema festgelegt werden. Jedes Sendesignal besitzt ein unterschiedliches Zeitsignal und ein unterschiedliches Spektrum. Alternativ kann mehr als eine Sendeantenne eingesetzt werden, wobei zu einem Zeitpunkt immer nur eine Antenne verwendet wird oder aber beide Antennen gleichzeitig senden. Wie zwischen den Antennen umgeschaltet wird, kann ebenfalls durch ein Multiplex-Schema bestimmt werden.

Dadurch wird eine Waveform-Diversität bzw. eine Sende-Antennen-Diversität erreicht. Das Grundprinzip von Diversität liegt darin, dass dieselbe Information, beispielsweise der Senderstandort, über viele voneinander unabhängige Wege, also verschiedene Burst-Paare oder verschiedene Sendeantennen-Paare erhalten wird, wobei diese Information auf jedem Weg vom Sender zum Empfänger unterschiedlich verfälscht wird, also ein systematischer Fehler des Eintreffzeitpunktes vorliegt. Durch Kombination der verfälschten Information, beispielsweise durch Mittelung der geschätzten, verfälschten Senderstandorte, kann die ursprüngliche Information mit einem Fehler erhalten werden, der im Mittel, gemittelt über sämtliche möglichen Standorte, kleiner ist als die auf den einzelnen Wegen empfangenen Informationen. Für ein Ortungssystem wird je nach gewählten Paar aus spezifischen Burst und Sendeantennen ein anderer systematischer Eintreffzeitpunkt-Fehler für jeden Senderstandort erhalten. Manche Burst-Paare bzw. Sendeantennen-Paare sind optimal für spezielle Standorte, d. h. sie ergeben den niedrigsten systematischen Fehler. An anderen Senderstandorten ergeben sie aber gegebenenfalls sehr hohe systematische Fehler. An diesen Standorten würden andere Burst-Paare bzw. Sendeantennen-Paare niedriger systematische Fehler ergeben.

Gemäß einem Ausführungsbeispiel werden empfangene Burst im Empfänger mit Qualitätswerten gewichtet, bevor sie zur Bestimmung des gemittelten Eintreffzeitpunktes herangezogen werden. Dadurch wird der fehlerhafte Einfluss gestörter Empfangsfolgen bei der Berechnung des gemittelten Eintreffzeitpunktes verringert.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockschaltbild einer Empfangsvorrichtung gemäß der vorliegenden Erfindung;

Fig. 2 und 3    Blockschaltbilder von Sendervorrichtungen gemäß Ausführungsbeispielen der vorliegenden Erfindung;

Fig. 4a - 4f bis 7a - 7f    graphische Darstellungen eines Schätzfehlers der Eintreffzeitpunkte unterschiedlicher Empfangsfolgen gemäß Ausführungsbeispielen der vorliegenden Erfindung;

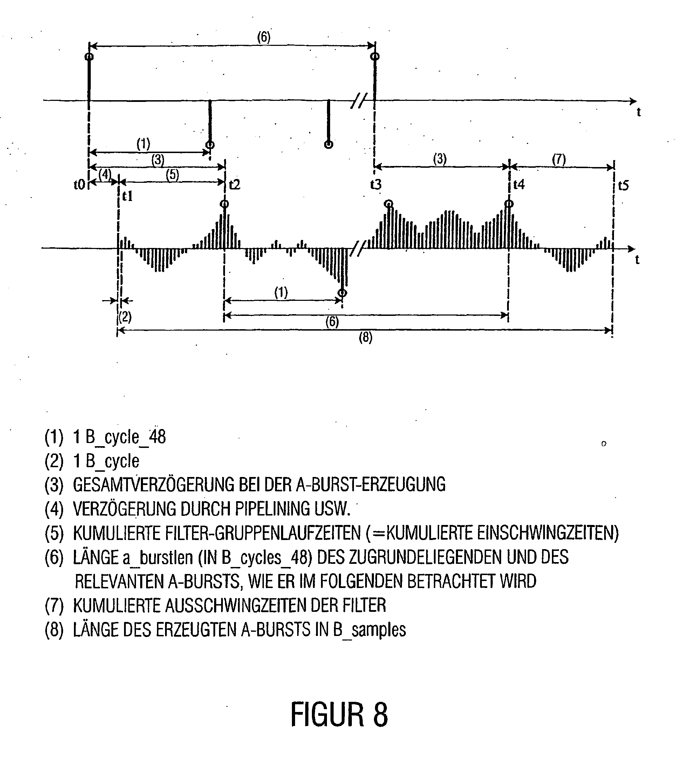

Fig. 8            graphische Darstellung einer Verzögerung eines Synchronisationsburst gemäß einem Ausführungsbeispiel der vorliegenden Erfindung;

Fig. 9            graphische Darstellung eines Burst-Multiplexschemas;

Fig. 10a - 10af       Definition von in einem Ausführungsbeispiel verwendeten Variablen; und

Fig. 11           ein Blockschaltbild einer Empfängseinrichtung gemäß der vorliegenden Erfindung;

Fig. 12           ein Blockschaltbild einer Kommunikationsvorrichtung gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

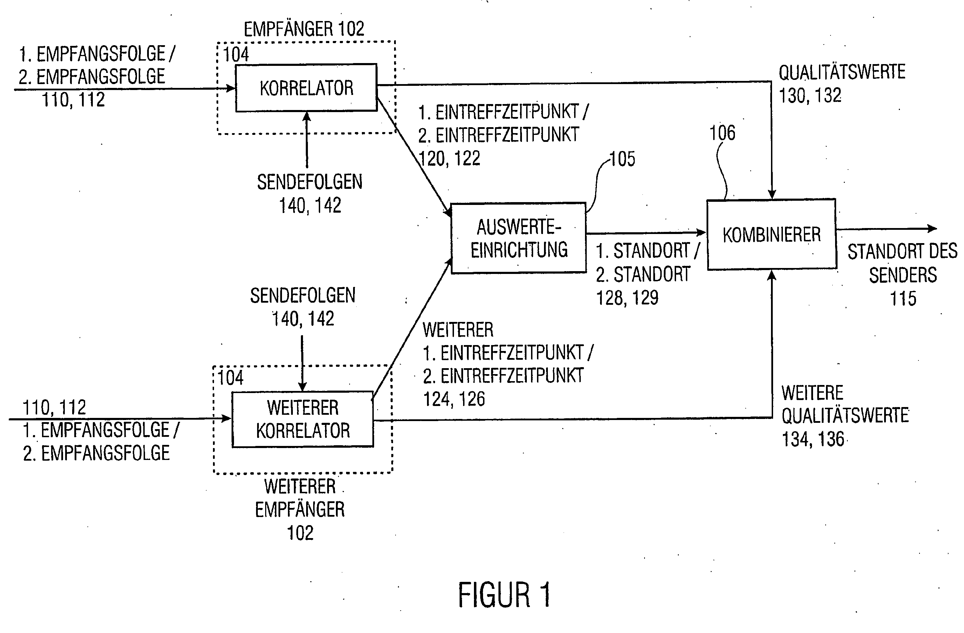

Fig. 1 zeigt ein Blockschaltbild einer Empfangsvorrichtung zum Bestimmen eines Standortes einer Sendervorrichtung gemäß einem Ausführungsbeispiel der vorliegenden Erfindung. Die Empfangsvorrichtung ist ausgebildet, um eine erste Empfangsfolge und eine zweite Empfangsfolge 110, 112 zu empfangen. Die Empfangsfolgen 110, 112 sind Sendefolgen, die von einer Sendevorrichtung (nicht gezeigt in Fig. 1) ausgesendet werden. Die Empfangsvorrichtung, ist ausgebildet, um den Standort 115 des Senders zu bestimmen. Gemäß diesem Ausführungsbeispiel weist die Empfangsvorrichtung zwei Empfänger 102 auf, die jeweils Korrelatoren 104 aufweisen. Ferner weist die Empfangsvorrichtung eine Auswerteeinrichtung 105 und einen Kombinierer 106 auf. Die Empfänger 102 sind ausgebildet, um die Empfangsfolgen 110, 112 zu empfangen und Eintreffzeitpunkte 120, 122, 124, 126 der Empfangsfolgen zu ermitteln. Dazu sind die Korrelatoren 104 ausgebildet, um die Sendefolgen 140, 142 zu empfangen, die von der Sendevorrichtung ausgesendet werden und den Empfangsfolgen 110, 112 entsprechen. Der Empfänger 102 ist ausgebildet, um den ersten Eintreffzeitpunkt 120 der ersten Empfangsfolge und den zweiten Eintreffzeitpunkt 122 der zweiten Empfangsfolge 112 zu bestimmen und an die Auswerteeinrichtung 105 bereitzustellen. Der weitere Empfänger 102 ist ausgebildet, um den weiteren ersten Eintreffzeitpunkt 124 der ersten Empfangsfolge 110 im weiteren Empfänger und den weiteren zweiten Eintreffzeitpunkt 126 der zweiten Empfangsfolge 112 im weiteren Empfänger zu bestimmen und an die Auswerteeinrichtung 105 bereitzustellen.

Die Auswerteeinrichtung 105 ist ausgebildet, um aus dem ersten Eintreffzeitpunkt 120 und dem weiteren ersten Eintreffzeitpunkt 124 einen ersten Standort 128 der Sendevorrichtung zu bestimmen und an den Kombinierer 106 bereitzustellen. Ferner ist die Auswerteeinrichtung 105 ausgebildet, um aus dem zweiten Eintreffzeitpunkt 122 und dem weiteren zweiten Eintreffzeitpunkt 126 einen zweiten Standort 129 der Sendevorrichtung zu bestimmen und an den Kombinierer 106 bereitzustellen. Der Kombinierer 106 ist ausgebildet, um aus dem ersten Standort 128 und dem zweiten Standort 129 den Standort 115 der Sendevorrichtung zu ermitteln. Dazu kann der Kombinierer ausgebildet sein, um eine Mittelung der Standorte 128, 129 durchzuführen.

Je nach Anwendungsgebiet kann die Empfangsvorrichtung einen einzigen Empfänger 102 oder eine Vielzahl von Empfängern 102 aufweisen, die erste Eintreffzeitpunkte und zweite Eintreffzeitpunkte an die Auswerteeinrichtung 105 bereitstellen. Wird die erfindungsgemäße Empfangsvorrichtung mit bekannten Empfängern kombiniert, so kann die Empfangsvorrichtung lediglich aus der Auswerteeinrichtung und dem Kombinierer 106 bestehen, wobei die Auswerteeinrichtung 105 ausgebildet ist, um von den eingesetzten Empfängern die Information über die Eintreffzeitpunkte zu erhalten. Die Auswerteeinrichtung 105 kann die Standorte 128, 129 über Laufzeitanalysen bestimmen. Die Standortinformationen 128, 129 können in Form von entsprechend standardisierte Werten, beispielsweise in Form von Koordinaten vorliegen und weiter verarbeitet werden.

Der in der Empfangsvorrichtung verwendete Algorithmus besteht darin, dass beide Eintreffzeitpunkte von den Empfängern zu einem Zentralrechner gegeben werden, der in Fig. 1 durch die Auswerteeinrichtung und den Kombinierer dargestellt ist. Anschließend werden aus den ersten Eintreffzeitpunkten, gehörig zur ersten Sendefolge bzw. Empfangsfolge aller Empfänger, ein erster Senderort ermittelt und danach aus den zweiten Eintreffzeitpunkten, gehörig zur zweiten Sendefolge bzw. zur zweiten Empfangsfolge aller Empfänger, ein zweiter Senderort ermittelt. Anschließend wird über die ermittelten Orte gemittelt. Im Zentralrechner werden also gemittelte Orte berechnet.

Bei den Empfangsfolgen 110, 112 kann es sich um Bursts handeln, die von einem Sender über einen Übertragungskanal zu den Empfängern 102 übertragen wurden. Bei dem Übertragungskanal kann es sich um einen leitungsgebundenen oder einen drahtlosen Übertragungskanal handeln.

Bei den Empfängern 102 kann es sich um eine Antenneneinheit handeln, die ausgebildet ist, um die digitale Information, in Form der empfangenen Empfangsfolgen, aus den über den Übertragungskanal gesendeten Empfangsfolgen 110, 112 zu ermitteln.

Der Empfänger 102 oder alternativ der Korrelator 104 können ausgebildet sein, um Qualitätswerte 130, 132, 134, 136 zu ermitteln, die eine Qualität der Empfangsfolgen 110, 112 bzw. der Eintreffzeitpunkte 120, 122, 124, 126 darstellen. Die Qualitätswerte 130, 132, 134, 136 geben den momentanen Einfluss der Mehrwege-Ausbreitung auf die Eintreffzeitpunkte 120, 122, 124, 126 an, sind also Qualitätswerte der geschätzten Eintreffzeitpunkte bezüglich der Verfälschung durch Mehrwege-Ausbreitung. Gemäß einem Ausführungsbeispiel handelt es sich bei den in der Empfangsvorrichtung berechneten Qualitätswerten um ein geschätztes Signal-zu-Rauschverhältnis, auch SNIR genannt, der Empfangsfolgen 110, 112. Alternativ kann es sich bei den Qualitätswerten 130, 132, 134, 136 um einen Parameter handeln, der den Mehrwegeeinfluss charakterisiert. Auf Grund der Diversität, d. h. auf Grund der unterschiedlichen Empfangsfolgen 110, 112, haben der erste Eintreffzeitpunkt 120, 124 und der zweite Eintreffzeitpunkt 122, 126 verschiedene Qualitätswerte.

Gemäß einem Ausführungsbeispiel werden im Empfänger nur noch diejenigen Eintreffzeitpunkte weiter verwendet, die hohe Qualitätswerte besitzen. Alternativ werden die Qualitätswerte im Kombinierer über eine Gewichtung bei der Berechnung des gemittelten Standorts 115 berücksichtigt. Das heißt, der Gewichtungskoeffizient hängt von den Qualitätswerten 130, 132, 134, 136 ab. Je besser die Qualität der Empfangsfolgen 110, 112, bzw. der daraus bestimmten Eintreffzeitpunkte 120, 122, 124, 126 umso höher fällt die Gewichtung bei einer Mittelung zur Bestimmung des gemittelten Standortes 115 aus.

Der gemittelte Standortes 115 kann aus einer arithmetischen Mittelung aus den Standorten 128, 129 erfolgen. Werden die Qualitätswerte 130, 132, 134, 136 bei der Ermittlung des gemittelten Standortes 115 berücksichtigt, so kann die Ermittlung des gemittelten Standortes 115 aus einer arithmetischen Mittelung aus den gewichteten Standorte 128, 129 bestimmt werden. Dazu kann der erste Eintreffzeitpunkt 120, 124 mit dem ersten Qualitätswert 130, 134 und der zweite Eintreffzeitpunkt 122, 126 mit dem zweiten Qualitätswert 132, 136 gewichtet werden.

Der Korrelator 104 ist gemäß diesem Ausführungsbeispiel ausgebildet, um die Eintreffzeitpunkte 120, 122 durch eine Korrelation der empfangenen Empfangsfolgen mit Sendefolgen 140, 142 zu ermitteln. Die Sendefolgen 140, 142 entsprechen Sendefolgen die von einer Sendevorrichtung (nicht gezeigt in Fig. 1) ausgesendet werden und nach der Übertragung von der Empfangsvorrichtung 100 als Empfangsfolgen 110, 112 empfangen werden und von dem Empfänger 102 als empfangene Empfangsfolgen an den Korrelator 104 bereitgestellt werden.

Handelt es sich bei der ersten Empfangsfolge 110 und der zweiten Empfangsfolge 112 um Empfangsfolgen, die sich lediglich darin unterscheiden, dass eine zugrundeliegende Sendefolge über eine erste Antenne für die erste Empfangsfolge 110 und über eine zweite Sendeantenne für die zweite Empfangsfolge 112 ausgesendet wurden, so kann der Korrelator 104 eine fortlaufende Korrelation der empfangenen Empfangsfolgen mit einer Sendefolge durchführen. Handelt es sich bei den Empfangsfolgen 110, 112 jedoch um Empfangsfolgen, die aus unterschiedlichen Sendefolgen hervorgegangen sind, so führt der Korrelator 104 eine Korrelation der empfangenen Empfangsfolgen sowohl mit der ersten Sendefolge 140 als auch mit der zweiten Sendefolge 142 durch. Bei der Verwendung eines Muliplex-Schema ist eine Korrelation der Empfangsfolge mit beiden Sendefolgen nicht nötig, weil erst auf das Multiplex-Schema aufsynchronisiert und dann mit der korrekten Sendefolge korreliert wird. Gemäß einem Ausführungsbeispiel weist die Empfangsvorrichtung 100 eine Steuereinheit (nicht gezeigt in den Figuren) auf, die auf ein, von dem Sender eingesetztes Multiplex-Schema aufsynchronisieren kann. Das Multiplex-Schema gibt dabei eine Abfolge der verwendeten Sendefolgen und damit eine Abfolge der Empfangsfolgen 110, 112 an. Eine Aufsynchronisation kann durch spezielle Präambeln oder durch andere Maßnahmen erfolgen. Beispielsweise kann die Empfangsvorrichtung ausgebildet sein, um ansprechend auf einem Empfang einer Synchronisationsfolge, beispielsweise der speziellen Präambel, die erste Sendefolge 140 und die zweite Sendefolge 142 in einer vorbestimmten Abfolge an den Korrelator 104 bereitzustellen.

In diesem und den folgenden Ausführungsbeispielen wird der gemittelte Standortes 115 aus einer ersten Empfangsfolge 110 und einer zweiten Empfangsfolge 112 ermittelt. Eine Verwendung von mehr als zwei Empfangsfolgen bzw. mehr als zwei Sendeantennen ist möglich. Dies ist vorteilhaft, da sich dadurch eine größere Diversität ergibt.

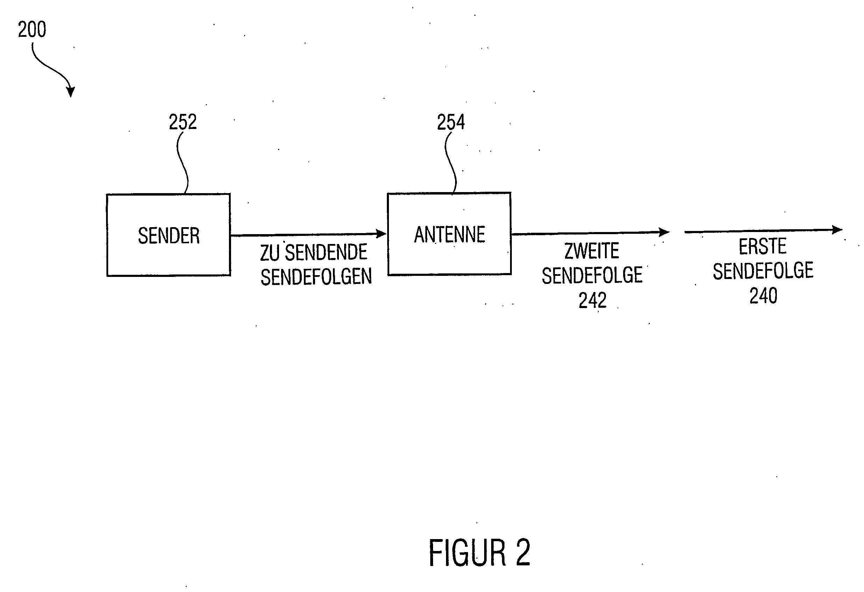

Fig. 2 zeigt ein Blockschaltbild einer Sendevorrichtung 200, die in Kombination mit der in Fig. 1 gezeigten Empfängervorrichtung genutzt werden kann. Die Sendevorrichtung 200 ist ausgebildet, um eine erste Sendefolge 240 und eine zweite Sendefolge 242 auszusenden. Dazu weist die Sendevorrichtung 200 einen Sender 252 und eine Antenne 254 auf. Der Sender 252 ist ausgebildet, um zu sendende Sendefolgen an die Antenne 254 bereitzustellen und über diese auszusenden. Die Sendefolgen 240, 242 werden über den Übertragungskanal an die Empfangsvorrichtung übertragen. Gemäß diesem Ausführungsbeispiel werden die erste Sendefolge 240 und die zweite Sendefolge 242 zeitlich nacheinander übertragen. Um eine größere Diversität zu erreichen, handelt es sich bei den Sendefolgen 240, 242 um Bursts mit unterschiedlichen spektralen Eigenschaften. Das heißt, dass die Sendefolgen 240, 242 beispielsweise aus unterschiedlichen Wertefolgen bestehen oder auf unterschiedlichen Frequenzen ausgestrahlt werden.

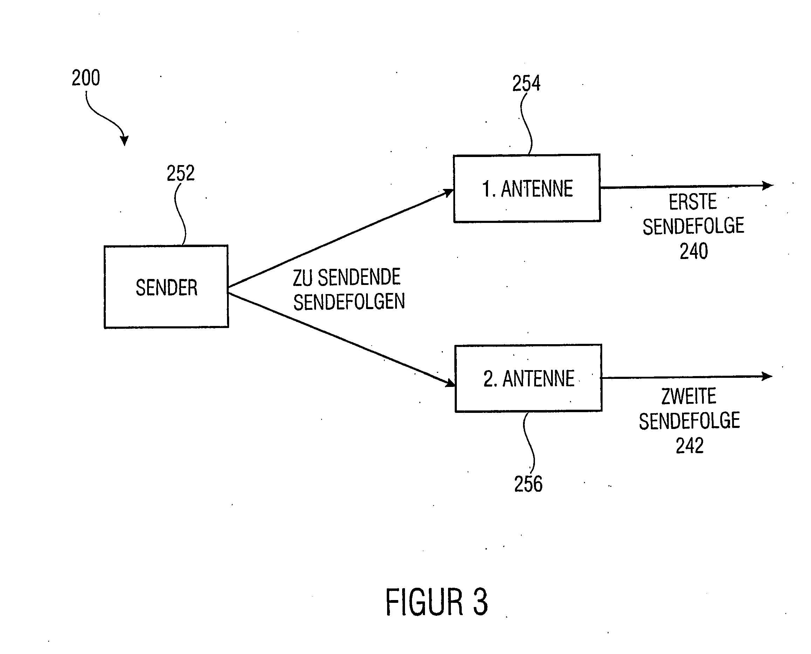

Fig. 3 zeigt ein Blockschaltbild einer weiteren Sendevorrichtung 200, die ebenfalls in Kombination mit der in Fig. 1 gezeigten Empfängervorrichtung eingesetzt werden kann. Im Unterschied zu der in Fig. 2 gezeigten Sendevorrichtung, zeigt die in Fig. 3 gezeigte Sendevorrichtung 200 eine erste Antenne 254 und eine zweite Antenne 256 auf. Der Sender 252 ist ausgebildet, um die zu sendenden Sendefolgen sowohl über die erste Antenne 254 als auch über die zweite Antenne 256 auszusenden. Gemäß diesem Ausführungsbeispiel wird die erste Sendefolge 240 über die erste Antenne 254 ausgesendet und die zweite Sendefolge 242 über die zweite Antenne 256. Die Sendefolgen 240, 242 können identisch sein, da auf Grund der zwei Antennen 254, 256 eine Antennen-Diversität gewährleistet ist. Dazu kann es sich bei den Antennen 254, 256 um Antennen mit unterschiedlichen Charakteristikas handeln, oder um identische Antennen mit unterschiedlichen Ausrichtungen der Hauptkeule oder unterschiedlichen Positionen, gegebenenfalls bei gleicher Ausrichtung. Dadurch wird eine Antennen-Diversität erreicht.

Für ein Kommunikationssystem kann die in Fig. 1 gezeigte Empfangsvorrichtung mit einer der in den Fig. 2 und 3 gezeigten Sendevorrichtung 200 kombiniert werden. Die Eintreffzeitpunkte können dabei vorteilhafterweise verwendet werden, um eine Synchronisation zwischen Empfangsvorrichtung und Sendevorrichtung 200 durchzuführen.

Abhängig von der Sendevorrichtung 200 kann Antennen-Diversität oder Waveform-Diversität, d. h. Burst-Diversität ausgenutzt werden oder auch eine Kombination aus Antennen-Diversität und Waveform-Diversität. Das Muster der Burst-Paare bzw. Sende-Antennen-Paare, bei der Nutzung jeweils zweier unterschiedlicher Bursts bzw. zweier unterschiedlicher Sendeantennen, ist willkürlich wählbar. Beispielsweise kann für eine feste erste Sendeantenne immer abwechselnd ein erster Burst und ein zweiter Burst übertragen werden oder aber je zweimal ein erster Burst über die erste Antenne und dann je zweimal der zweite Burst über die zweite Antenne. Das zugrundeliegende Muster kann dabei frei programmierbar sein. In der Empfangsvorrichtung muss das Muster der Bursts bekannt sein, da hier eine Kreuzkorrelation mit den jeweils richtigen gesendeten Bursts durchgeführt werden muss. Eine Synchronisation auf das gewählte Muster kann dadurch erfolgen, dass ein Synchronisationsburst dedektiert wird, dem immer das selbe programmierte Muster folgt. Das Sendeantennen-Muster kann vom Empfänger ignoriert werden.

Bei der Sendeantennen-Diversität können die Sendeantennen gleichzeitig senden oder auch zeitlich gemultiplext.

Im Folgenden werden mögliche Sendeimpulse, also Bursts bzw. Waveforms dargestellt, die gemäß dem erfindungsgemäßen Ansatz für die Schätzung des Eintreffzeitpunktes der Sendeimpulse in der Empfangsvorrichtung genutzt werden können.

RRC003 beschreibt ein Root Raised Cosine-Sendeimpulsformer mit Roll-off 0.03. Der Crestfaktor für diese Waveform beträgt für reelle Signale 8 dB und für komplexwertige Signale 7 dB.

RRC024 bezeichnet einen Root Raised Cosine-Sendeimpulsformer mit Roll-off 0.24. Der Crestfaktor beträgt für reelle Signale 5 dB und für komplexwertige Signale 4.3 dB.

RRC10 bezeichnet einen Root Raised Cosine-Sendeimpulsformer mit Roll-off 1.0. Der Crestfaktor beträgt für reelle Signale 3.6 dB und für komplexwertige Signale 3.4 dB.

Gauss054 bezeichnet einen weich bandbegrenzten Gauss-Impuls mit nomierter Bandbreite 0.54. Der Crestfaktor beträgt für reelle Signale 1.9 dB und für komplexwertige Signale 1.8 dB.

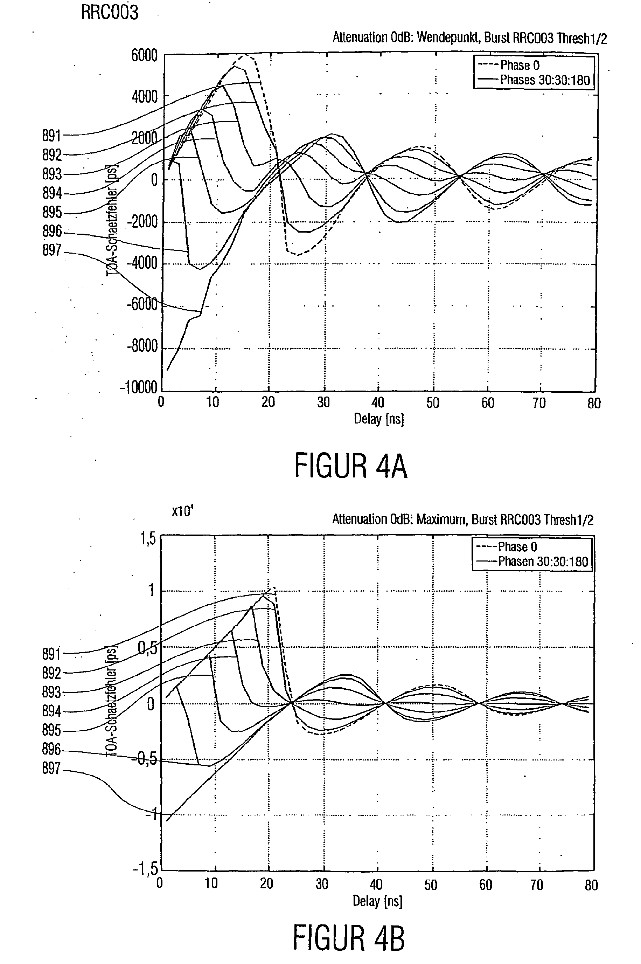

Die Fig. 4a bis 4f, 5a bis 5f, 6a bis 6f, 7a bis 7f zeigen die Hüllkurven des Time-Of-Arrival-Schätzfehlers, also dem Schätzfehler des Eintreffzeitpunktes einer Waveform in einer Empfangsvorrichtung bei einer folgendermaßen charakterisierten Zwei-Wege-Übertragung:

Es werden exakt zwei dirac-förmige Pfade empfangen.

Der zweite Pfad ist gegenüber dem ersten Pfad um den konstanten Faktor Attenuation gedämpft, das heißt, der Kanal ist zeit-invariant, fadet also nicht. Der Attenuation-Wert in dB ist im Titel einer jeden Figur angegeben, wobei die Werte 0 dB, d. h. zwei gleich starke Pfade, 6 dB und 10 dB untersucht werden. Bei den letzten beiden Werten dominiert der erste eintreffende Pfad.

Das Delay zwischen den beiden Pfaden wird auf der x-Achse der Figuren von 1 ns bis 80 ns variiert.

Der konstante Phasenunterschied zwischen den beiden Pfaden (in den Fig. als Phase angegeben) wird von 0 Grad bis 180 Grad in Schritten von 30 Grad variiert. Diese Kurvenschar ergibt die Einhüllende.

Bei der Übertragung wird kein thermisches Rauschen hinzuaddiert, das heißt, das Signal-zu-Rauschverhältnis ist extrem groß.

Die y-Achse jedes Bildes gibt den ermittelten Schätzfehler für die TOA (TOA; TOA = Time Of Arrival) in ps für die jeweils untersuchte Konfiguration wieder. Als ideale TOA wird dabei derjenige Wert betrachtet, der bei der Übertragung, über einen Einwege-Kanal ermittelt werden würde, wenn nur noch der erste der beiden Pfade vorhanden wäre.

In je zwei aufeinanderfolgenden Bildern werden die Fehler für zwei unterschiedliche Methoden der TOA-Schätzung dargestellt. Zuerst wird das Ergebnis einer sog. Wendepunktmethode gezeigt, wobei aus der Lage des Wendepunktes der linken Flanke am ersten deutlichen Peak die TOA ermittelt wird. Das jeweils zweite Bild zeigt die Ergebnisse für eine sogenannte Maximum-Methode, bei der das Maximum des ersten deutlichen Peaks die TOA ermittelt wird. Welche Methode im Bild untersucht wurde, ist in der Titelzeile zu lesen.

Der erste deutliche Peak ist der erste Peak, dessen Betrag höher als ein vorgegebener Wert Peak Thresh bezüglich des maximalen Betrags der Korrelation liegt. Für gewisse Waveforms und gewisse Konstellationen kann dies der Hauptpeak sein, für andere ist es gegebenenfalls der linke Nebenripple, wobei die Auswahl des linken Nebenripples bei gewissen Waveforms im Schätzalgorithmus Vorteile bieten kann. Im Falle einer Fehlschätzung kann der Algorithmus fälschlicherweise auch einen linken oder rechten Nebenripple der Korrelationsfunktion finden. Dies kann in den Figuren als sehr großer TOA-Fehler erkannt werden, der oft, aber nicht immer, bei größeren Delays schlagartig kleiner wird. Der Peakthresh beträgt im Regelfall ½, kann aber gegebenenfalls variiert werden. Sein Wert ist in der Titelzeile jeder Figur enthalten.

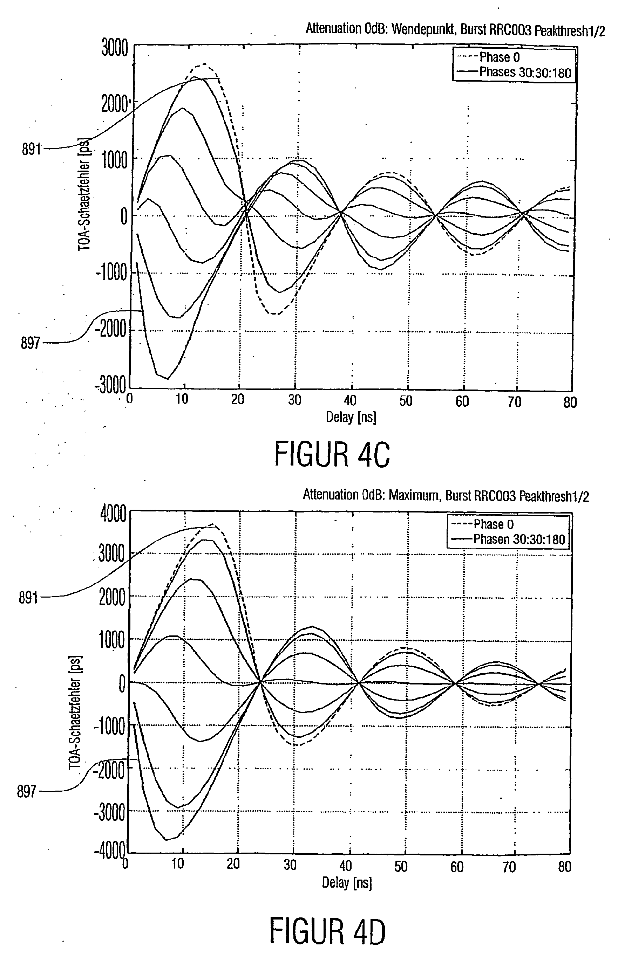

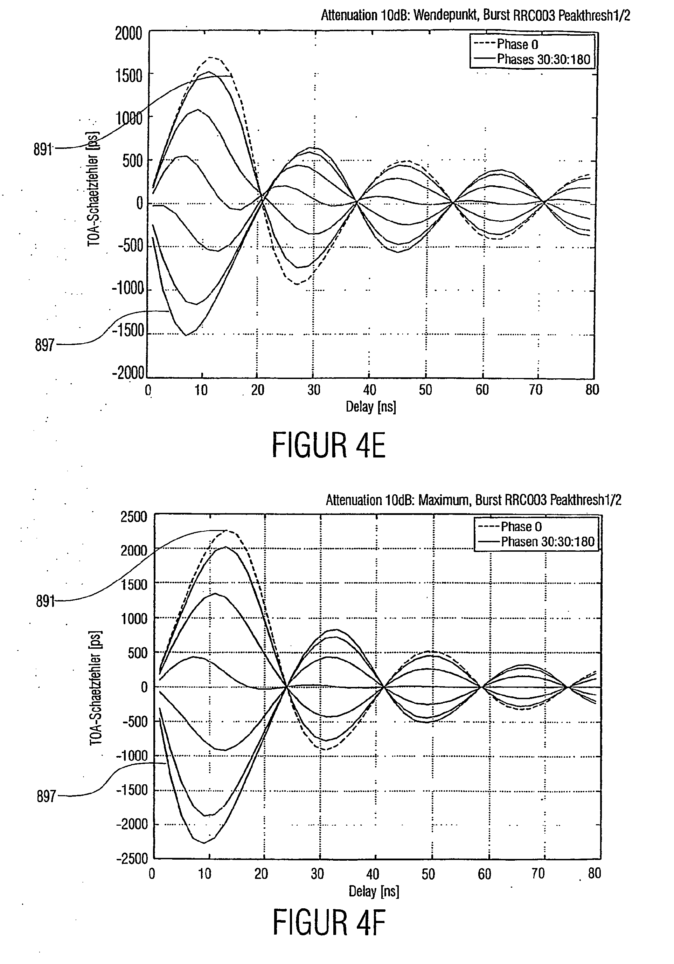

Die Ausführungen zu den Fig. 4 bis 7 werden im Folgenden anhand der Fig. 4A - 4F konkretisiert. Die Fig. 4a bis 4f beziehen sich auf die Waveform RRC003.

In Fig. 4A ist auf der x-Achse das Delay in ns und auf der y-Achse der TOA-Schätzfehler in ps angegeben. Die Attenuation beträgt 0 dB, zur Ermittlung des Eintreffzeitpunktes wird die Wendepunkt-Methode herangezogen und der Peakthresh beträgt 1/2. Die Kurve 891 stellt einen Phasenunterschied von 0 Grad dar. Die Kurve 892 stellt einen Phasenunterschied von 30 Grad, die Kurve 893 einen Phasenunterschied von 60 Grad, die Kurve 894 einen Phasenunterschied von 90 Grad, die Kurve 895 einen Phasenunterschied von 120 Grad, die Kurve 896 einen Phasenunterschied von 150 Grad und die Kurve 897 einen Phasenunterschied von 180 Grad dar. Die Kurven 891 und 897 stellen somit die Hüllkurven des TOA-Schätzfehlers dar.

Fig. 4B entspricht der in Fig. 4A gezeigten Darstellung, wobei zur Ermittlung der TOA die Maximum-Methode herangezogen wird.

Die graphischen Darstellungen in den Fig. 4C und E entsprechen der Darstellung in Fig. 4A, wobei in der Fig. 4C eine Attenuation von 6 dB und in der Fig. 4E eine Attenuation von 10 dB zugrundegelegt wird. In den Fig. 4C und 4E sind wiederum die Einhüllenden 891, 897 gezeichnet. Dem gemäß entsprechen die Darstellung in den Fig. 4D und 4F der Darstellung von Fig. 4B, wobei bei der Fig. 4D wiederum eine Attenuation von 6 dB und bei der Fig. 4F eine Attenuation von 10 dB zugrundegelegt wurde. In den Fig. 4D und 4F sind ebenfalls die Hüllkurven 891, 897 bezeichnet.

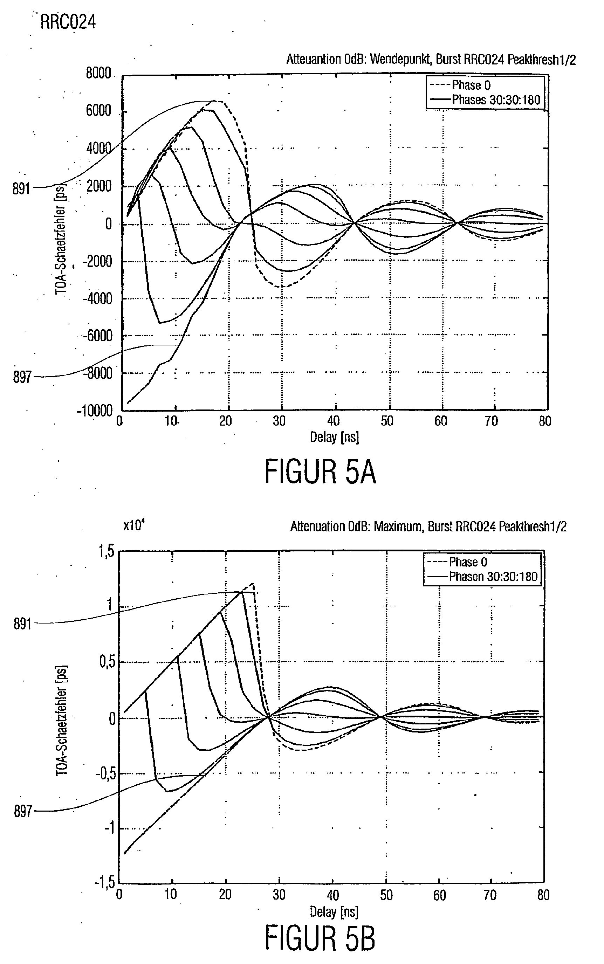

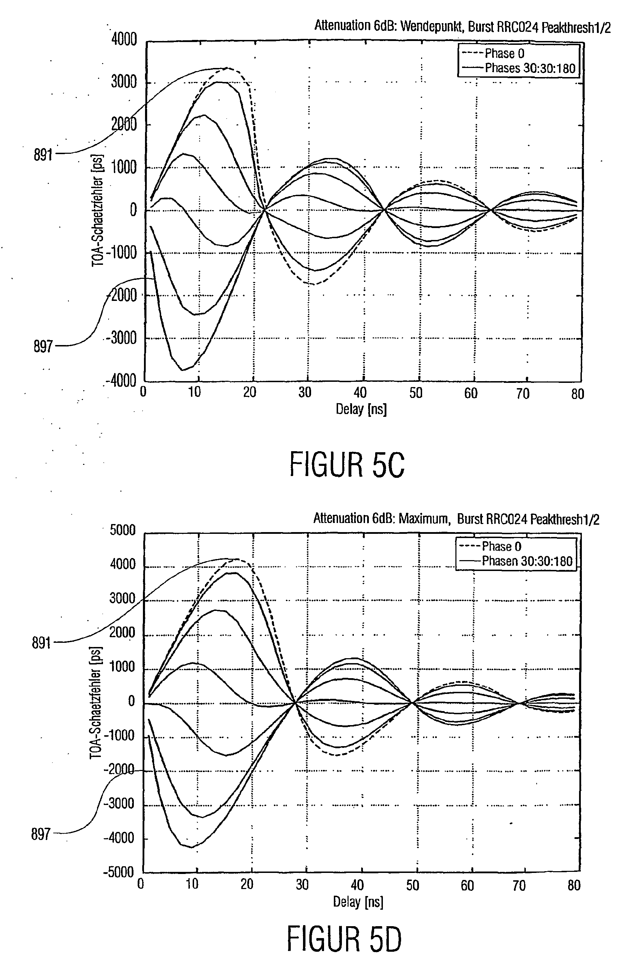

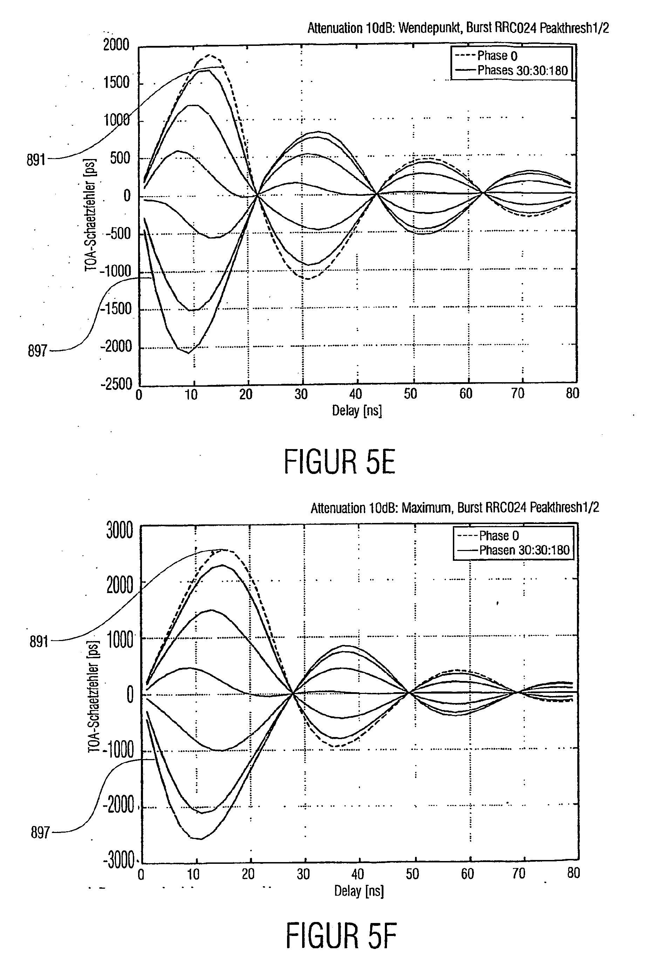

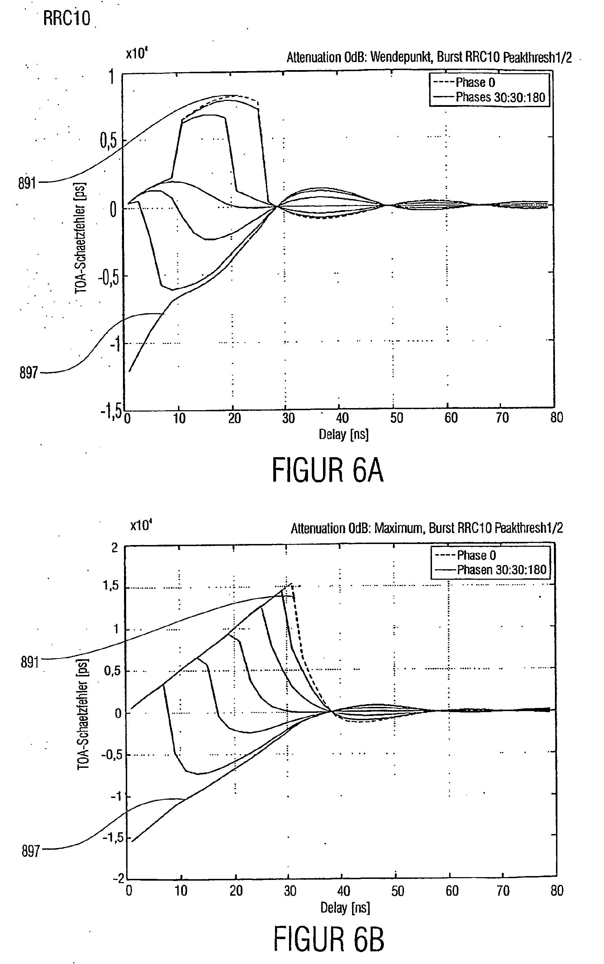

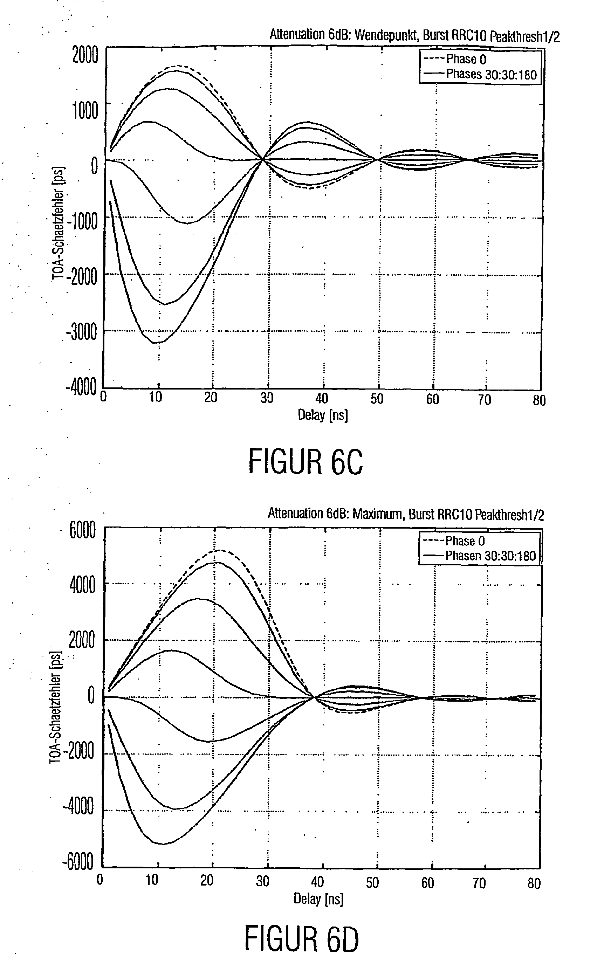

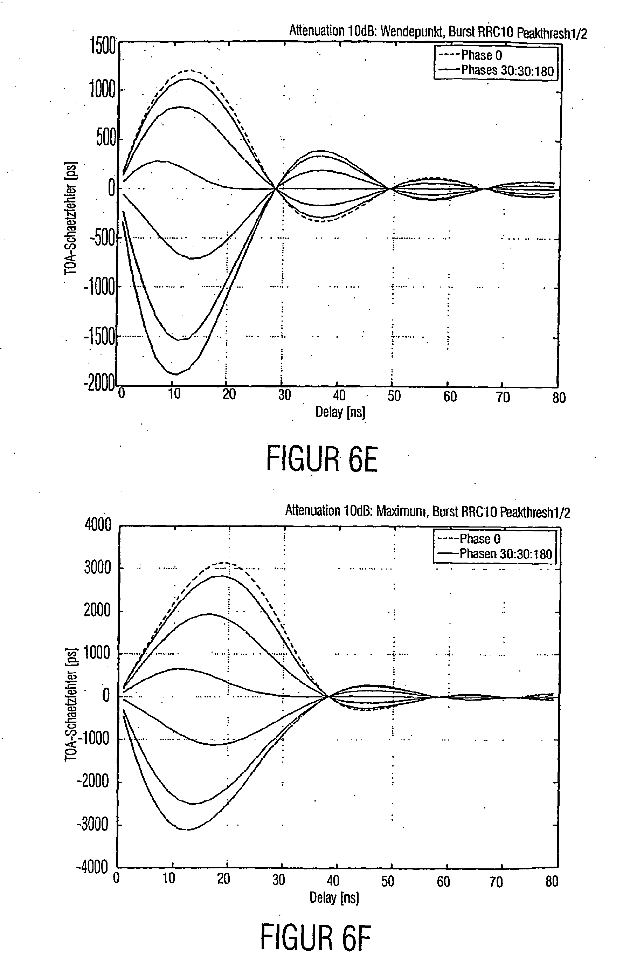

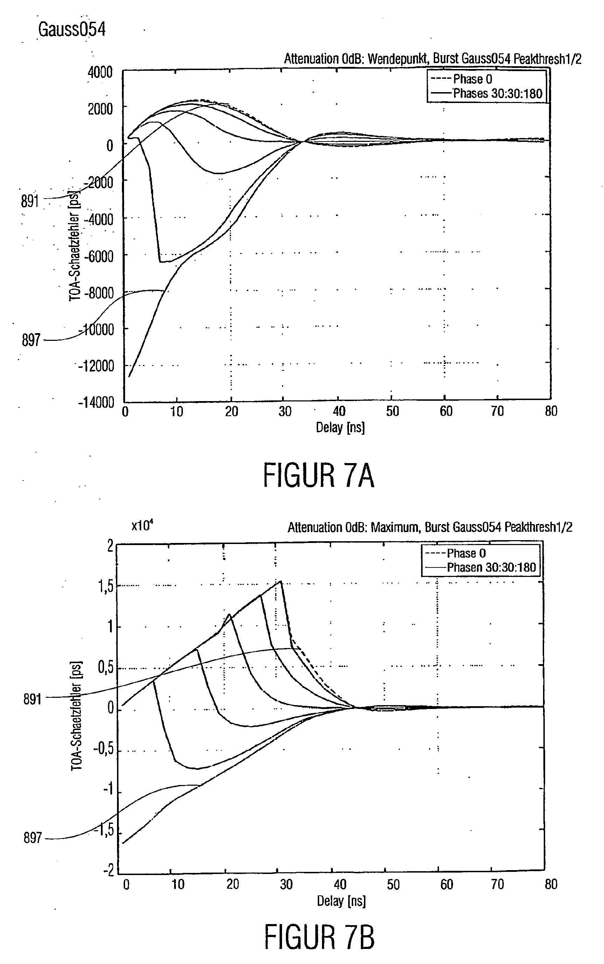

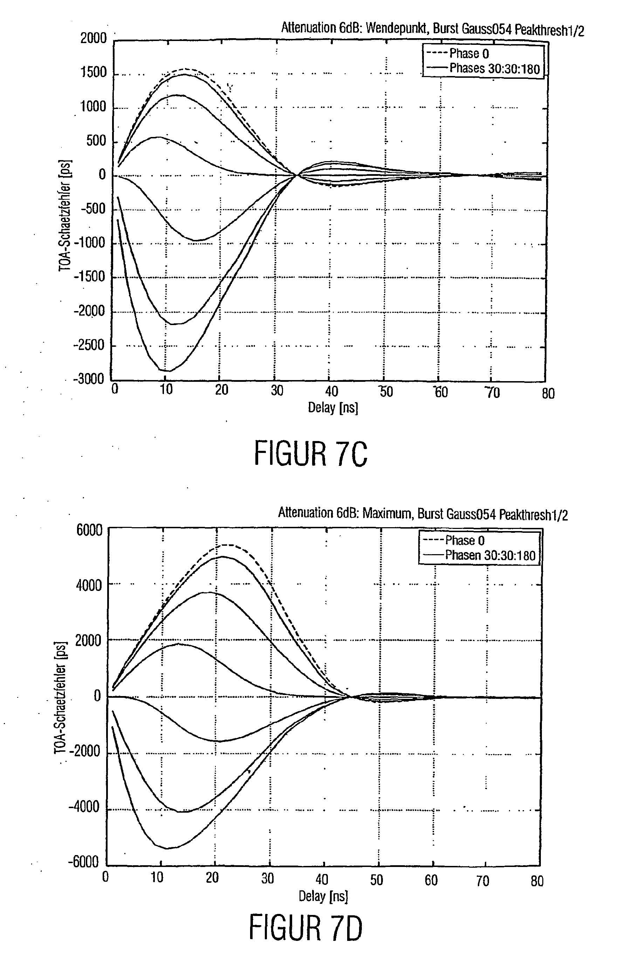

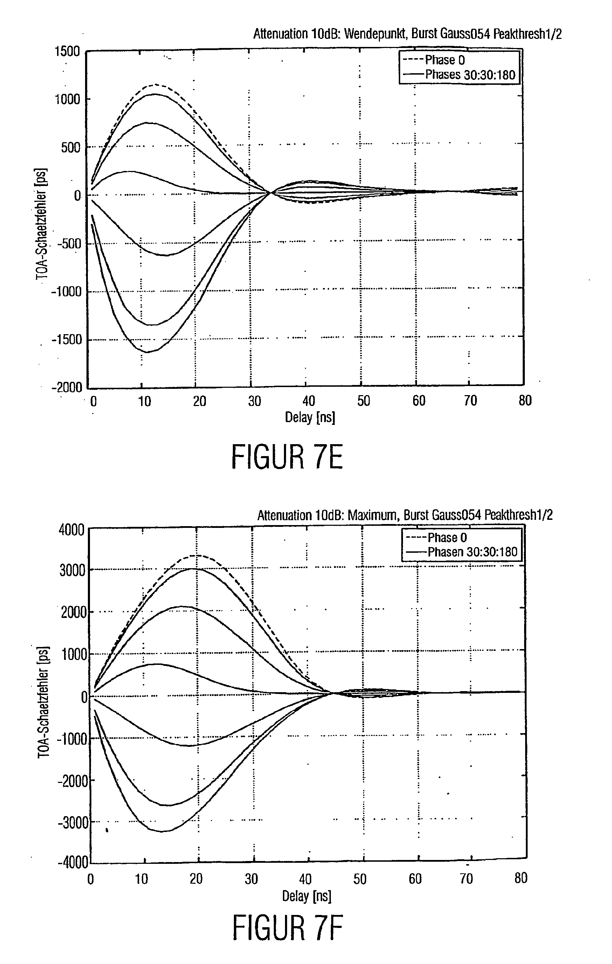

Entsprechend zu den Fig. 4A bis 4F zeigen die Fig. 5A bis 5F den TOA-Schätzfehler unter Zugrundelegung der RRC024-Waveform, die Fig. 6A bis 6F unter Zugrundelegung der Waveform RRC10 und die Fig. 7A bis 7F unter Zugrundelegung des Gauss054. In den Fig. 5 bis 7 sind lediglich in den jeweils ersten Fig. 5A, B, bis 7A, B die Fehlereinhüllenden 891, 897 mit Bezugszeichen versehen.

In fast allen der in den Fig. 4 bis 7 untersuchten Konfigurationen lässt sich erkennen, dass das Wendepunkt-Kriterium deutlich niedrigere TOA-Schätzfehler liefert, als das Maximum-Kriterium. Ist der zweite Pfad gegenüber dem ersten stark gedämpft, dann ist sein Einfluss auf den TOA-Fehler geringer. Dieser Effekt lässt sich allerdings in erster Linie für große Delays beobachten. Bei kleinen Delays wirkt auch ein stark gedämpfter zweiter Pfad einen deutlichen TOA-Fehler.

Der TOA-Fehler ist immer dann am größten, wenn der verzögerte Pfad nur ein Delay von unter 30 ns bezüglich dem ersten Pfad hat. Dies trifft zu bei der Verwendung des günstigen Wendepunkt-Kriteriums und einer vorteilhaften Waveform. Davon kann ausgegangen werden, da sich dieses Ergebnis auch auf noch mehr Ausbreitungspfade verallgemeinern lässt. Kritisch sind nur diejenigen Pfade, mit Verzögerungen unter 30 ns.

Im Folgenden werden die RRC-Bursts betrachtet.

Bei allen RRC-Bursts steigt bei gleich starken Pfaden, also einer Attenuation 0dB und für Phasen kleiner 180 Grad der TOA-Fehler zunächst nahezu linear, bei der Wendepunkt-Methode bzw. praktisch linear bei der Maximum-Methode an. Dies liegt daran, dass der zweite Pfad des Hauptmaximum bzw. dem Wendepunkt der Korrelationskurve nach rechts verschiebt. Bei der Maximum-Methode springt der Fehler dann irgendwann schlagartig nach 0. Dies erfolgt bei demjenigen Delay, wo sich der Hauptpeak in zwei Peaks teilt und der Algorithmus dann plötzlich den korrekten ersten Peak, der zum ersten Pfad gehört, detektiert.

Für die Phase 180 Grad, und ebenfalls Attenuation 0 dB, ist der TOA-Fehler bereits bei sehr kleinen Delay von 1 ns sehr stark negativ. Das bedeutet, dass hier die entstehende Korrelationskurve einen starken linken Nebenripple besitzt und der Algorithmus fälschlicherweise diesen Hauptpeak auswertet. Bei wachsendem Delay verschmilzt der linke Nebenripple allmählich mit dem Hauptpeak, so dass der negative TOA-Fehler wächst und verschwindet.

Für Attenuation ≥ 6 dB lässt sich ein kontinuierliches Hin-und Her-Schwingen des TOA-Fehlers zwischen negativen und positiven Werten beobachten. Dabei existieren auch einzelne Delay-Werte, die zu einem TOA-Fehler von 0 führen.

Beim RRC003-Burst klingt der TOA-Fehler für wachsendes Delay nur sehr langsam ab. Auch nach 80 ns Delay zwischen den beiden Pfaden ist der Fehler noch erheblich, beispielsweise bei 1.000 ps für Attenuation 0 dB, weil die Impulsantwort des RRC003-Bursts, und damit der Einfluss des verzögerten zweiten Pfades, nur sehr langsam verschwindet.

Für einen wachsenden Roll-off lässt sich erkennen, dass der TOA-Fehler für wachsendes Delay sehr viel schneller abklingt, was an der flacheren und schneller ausklingenden Impulsantwort liegt. Hingegen lässt sich für kleine Delays keine einheitliche Tendenz feststellen. Hier verursacht der RRC024-Burst den größten TOA-Fehler.

Zur Bestimmung des Eintreffzeitpunktes im Korrelator wird nach Möglichkeit die Wendepunkt-Methode verwendet, da diese zur Schätzung des Eintreffzeitpunktes zu besseren Ergebnissen führt.

Für gleich starke Pfade und kleine Delays bietet der bandbegrenzte Gauss-Impuls Gauss054 Vorteile. Der Fehler kann zwar bis zu -12 ns werden, ein positiver Fehler ist aber stets kleiner als +2 ns.

Ausgehend von den beschriebenen Eigenschaften ließen sich noch günstigere Waveforms designen, die vorteilhafterweise als Sendefolgen für den erfindungsgemäßen Ansatz eingesetzt werden können.

Abhängig von den Umgebungsbedingungen, in denen die erfindungsgemäßen Vorrichtungen eingesetzt werden, können unterschiedliche der vorgestellten Waveforms vorteilhaft sein. Vorteilhafterweise werden für die erste und zweite Sendefolge unterschiedliche Waveforms eingesetzt, die einen gemittelten Eintreffzeitpunkt ergeben, dessen Fehler aufgrund der Mittelung möglichst in Richtung 0 kompensiert ist.

Im Folgenden werden weitere Ausführungsbeispiele des erfindungsgemäßen Ansatzes beschrieben.

In dem folgenden Ausführungsbeispiel werden die Empfangsfolgen als T-Burst, die Synchronisationsfolge als A-Burst, die Empfangsvorrichtung als Empfänger und die Sendevorrichtung als Sender bezeichnet.

Gemäß diesem Ausführungsbeispiel sind die T-Bursts im Sender programmierbar. Sie sind nach der Ausstrahlung **dadurch gekennzeichnet, dass**

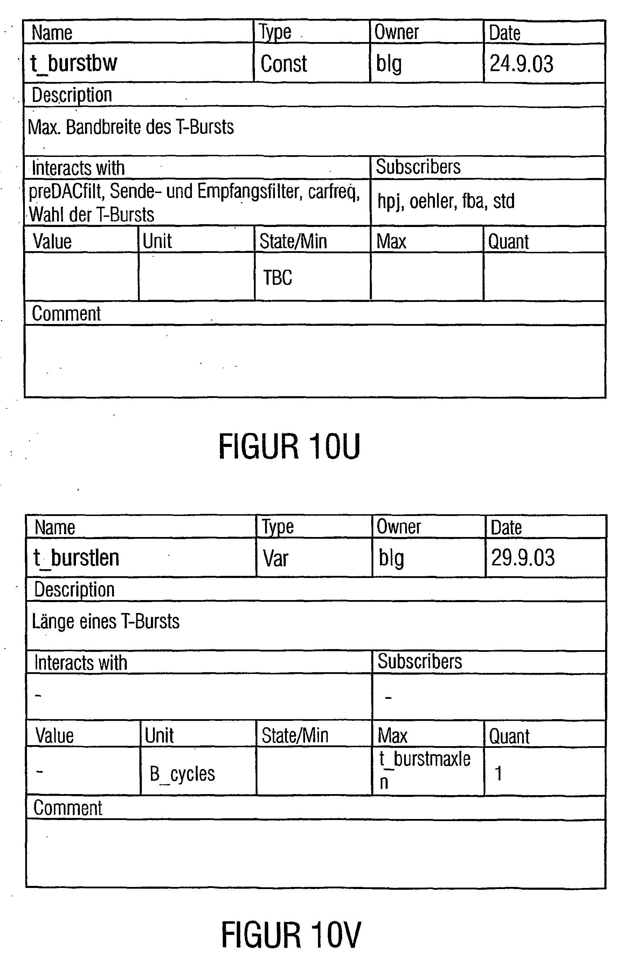

ihre Bandbreite den Wert t_burstbw (gezeigt in Fig. 10u) nicht überschreitet,

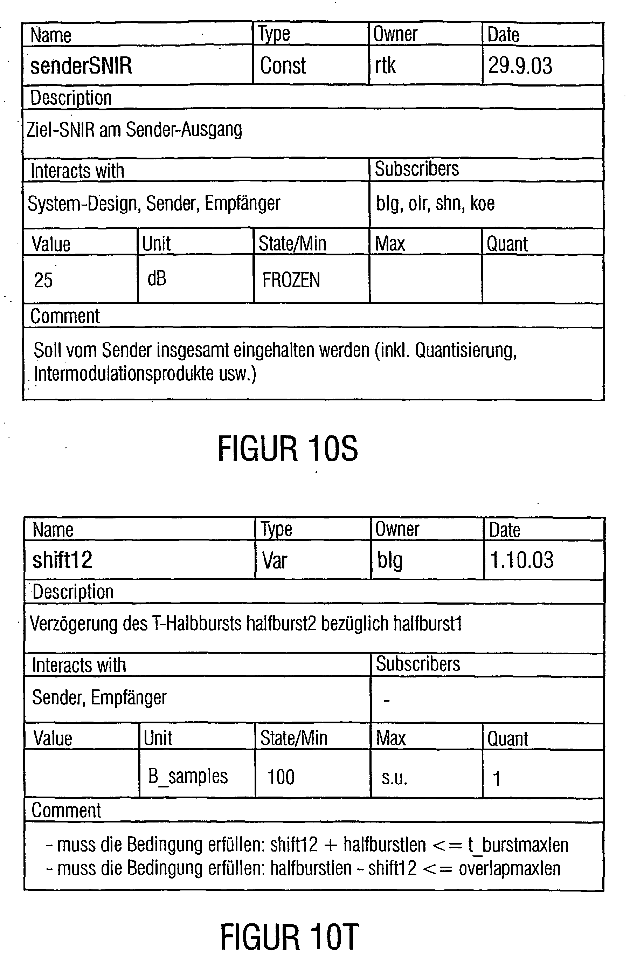

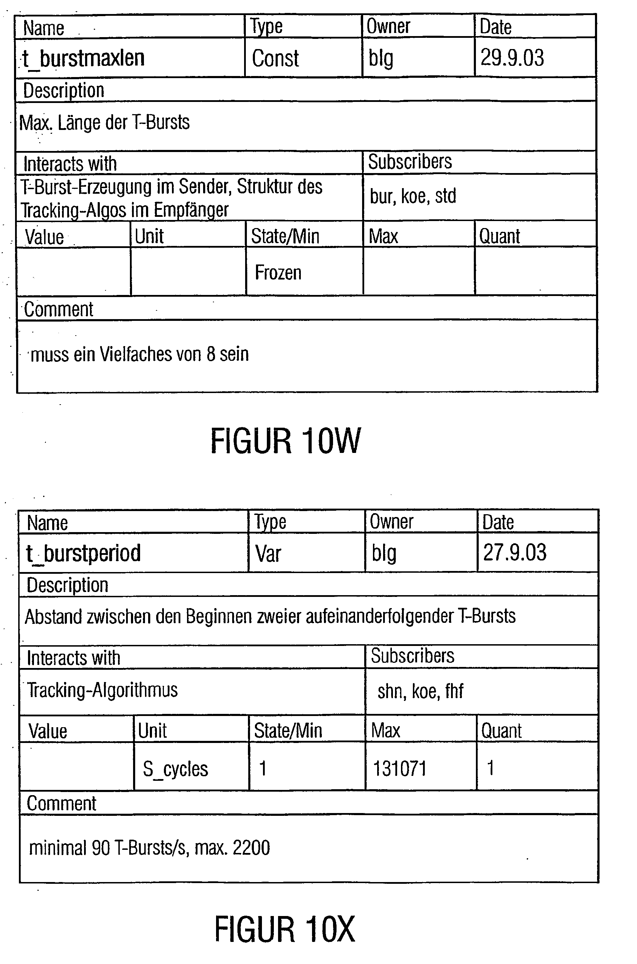

ihre zeitliche Dauer ungefähr den einstellbaren Wert t_burstlen (gezeigt in Fig. 10v) B_cycles beträgt, plus zusätzliche zeitliche Aufweitung beim Übergang von einprogrammierten B_samples zum physikalischen Signal, z.B. Interpolation, dispersive analoge Schaltungen,

die maximale zeitliche Dauer t_burstmaxlen (gezeigt in Fig. 10w) B_cycles beträgt, plus die o.a. Aufweitungen, was durch die Sender-Implementierung vorgegeben wird,

ihr SNIR nach am Sender-Ausgang den Wert senderSNIR (gezeigt in Fig. 10s) oder besser beträgt.

Im Sender können zwei T-Bursts einprogrammiert werden, die nach einem programmierbaren Auswahlschema ausgestrahlt werden. Diese beiden T-Bursts werden im folgenden als T-Burst 0 bzw. T-Burst 1 bezeichnet. Jeder der beiden T-Bursts liegt in komplexwertigen B_samples vor, d.h. das auszustrahlende T-Burst-Signal wird in I- und Q-Komponente jeweils mit der Samplefrequenz B_clock abgetastet.

Die T-Bursts werden derart erzeugt, dass sie in einer verwendeten 6-Quantisierung optimal ausgesteuert werden. D.h es wird der maximal darstellbare Wert +31 vom Signal tatsächlich angenommen.

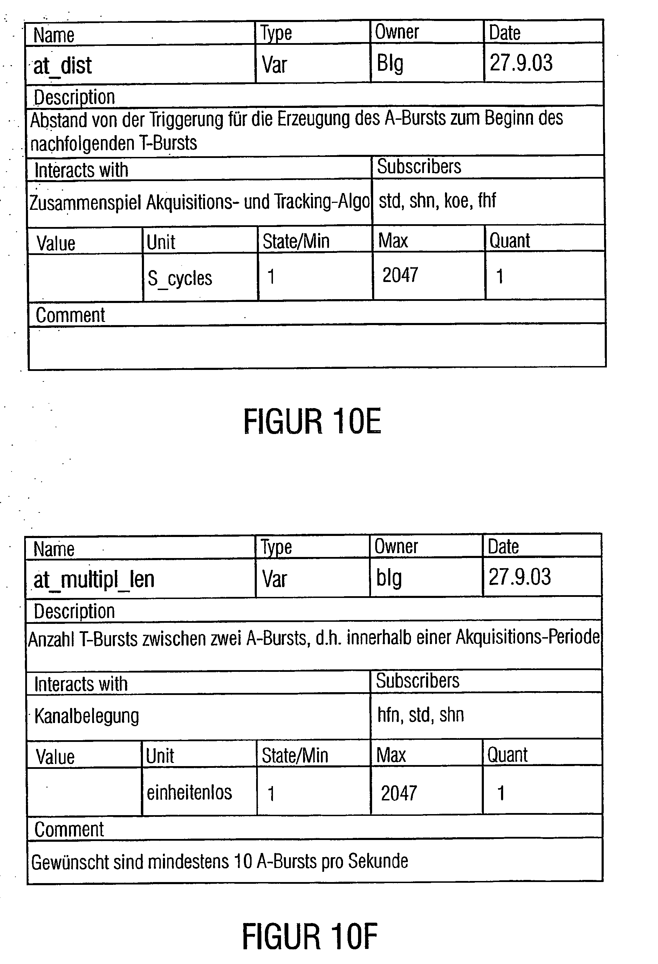

Beim Multiplex aus A- und T-Bursts wird innerhalb einer Akquisitions-Periode immer genau ein A-Burst und anschließend at_multipl_len (gezeigt in Fig. 10f) T-Bursts gesendet, wobei der Wert at_multipl_len einstellbar ist. Dieses Schema wird periodisch fortgeführt. Zwischen dem A- und dem ersten T-Burst innerhalb einer Periode, zwischen den einzelnen T-Bursts und zwischem dem letzten T-Burst einer Periode und dem A-Burst der nächsten Periode sind einstellbare Abstände einzuhalten.

Im Sender existiert ein Zähler at_multipl_cntr, der immer vor dem Beginn des A-Bursts auf 0 zurückgesetzt wird und nach jedem komplett abgestrahlten T-Burst um 1 erhöht wird. Der maximale Wert von at_multipl_cntr beträgt somit at_multipl_len.

Für den Zeit-Multiplex wird der in B_samples vorliegende A-Burst betrachtet.

Wenn im folgenden vom "relevanten A-Burst", immer in B_samples, die Rede ist, dann ist damit nur der unten beschriebene Teil des "erzeugten A-Bursts", immer in B_samples gemeint, der von einem in B_samples_48 vorliegenden A-Burst ausgehend durch Sendeimpulsformung, Upsampling und Upconversion erzeugt worden ist, beispielsweise unmittelbar im Sender selbst, so wie er am Multiplexer-Eingang vorliegt.

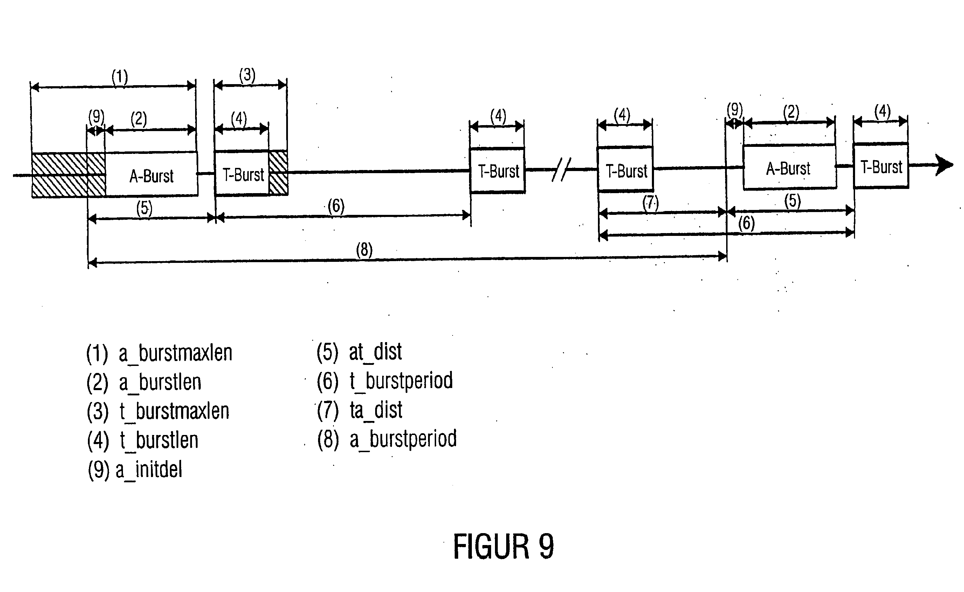

Fig. 9 verdeutlicht, welcher Teil des erzeugten A-Bursts mit "relevanter A-Burst" gemeint ist. Die obere Hälfte des Bildes zeigt den "zugrundeliegenden A-Burst" in B_samples_48, der Abstand (1) zwischen zwei Samples ist somit B_cycle_48. Seine gesamte Länge (6) ist a_burstlen, in B_cycles_48.

Fig. 9 zeigt Verzögerungen und Zeitdauern des in B_samples_48 gespeicherten A-Bursts, des durch Sendeimpulsformung, Upsampling und Upconversion erzeugten A-Bursts in B_samples sowie des relevanten A-Bursts.

Die untere Hälfte zeigt den erzeugten A-Burst in B_samples. Der Abstand (2) zwischen zwei Samples ist somit B_cycle.

Zum Zeitpunkt t0 wird das erste B_sample_48 des gespeicherten A-Bursts in die Signalerzeugung, Sendeimpulsformung, Upsampling und Upconversion gegeben. Je nach Implementierung erscheint dieses erste B_sample_48 des gespeicherten A-Burst erst zum Zeitpunkt t2 im erzeugten A-Burst, d.h. nach einer Verzögerung (3). Diese Verzögerung besteht aus zwei Anteilen. Durch Pufferung bei der Signalerzeugung für Pipelining usw. entsteht eine initiale Verzögerung (4) vom Zeitpunkt t0, wo das erste B_sample_48 des gespeicherten A-Bursts in die Signalerzeugung eingeschleust wird, bis zum Zeitpunkt ti, wo das erste gültige B_sample des erzeugten A-Bursts von dieser Signalerzeugung ausgegeben wird. Weiterhin haben alle benutzten Filter, Sendeimpulsformer und Upsampling-Tiefpässe, Gruppenlaufzeiten, die sich zu einer Filter-Laufzeit (5) kumulieren. Wenn der erzeugte A-Burst offline erstellt wird, dann ist die Verzögerung (4) = 0, falls nicht der Sender zusätzliches Pipelining einführt. Die Verzögerung durch das Einschwingen der Filter, d.h. deren Gruppenlaufzeiten, sind jedoch stets vorhanden und zu beachten.

Wenn das letzte B_sample_48 des gespeicherten A-Bursts zum Zeitpunkt t3 in die Signalerzeugung gegeben wird, dann erscheint es ebenfalls erst zum Zeitpunkt t4 nach der Verzögerung (3) als B_sample am Ausgang der Signalerzeugung. Das letzte gültige B_sample des erzeugten A-Bursts wird zum Zeitpunkt t5 von der Signalerzeugung ausgegeben. Nach der Zeitdauer (7), also t5 - t4, sind alle Filter ausgeschwungen. Bei den üblicherweise verwendeten Filtern mit symmetrischer Impulsantwort ist die Zeitdauer (7) gleich den kumulierten Gruppenlaufzeiten (5).

Die kumulierten Impulsverbreiterungen durch dispersive Filter, d.h. Summe aus Ein- und Ausschwingzeiten, (5)-+-(7) dürfen den Wert a_maximpwiden B_samples nicht überschreiten, damit ein ordungsgemäßes Funktionieren des Gesamtsystems, insbesondere des Empfängers, gewährleistet ist.

Die Gesamtlänge, ausgedrückt in gültigen B_samples des erzeugten A-Bursts ist somit (8), also die Summe aus (5), (6) und (7). Da (5) und (7) implementierungsabhängig sind, wird im folgenden stets (6) (also a_burstlen, ausgedrückt in B_samples_48) als die Länge des relevanten A-Bursts betrachtet. In einer anderen Darstellung ist in der Einheit B_samples a_burstlen_B der Abstand vom ersten zum letzten B_sample, die jeweils zu dem ersten bzw. letzten B_sample_48 des gespeicherten A-Bursts zugehörig sind.

Die im folgenden betrachtete Länge des relevanten A-Bursts enthält somit auch keinerlei Signal-Verbreiterungen durch die dispersiven Filter-Impulsantworten bei der Signalerzeugung, Sendeimpulsformer und Upsampling-Tiefpässe sowie keine etwaigen weiteren implementierungsbedingten Signal-Verbreiterungen.

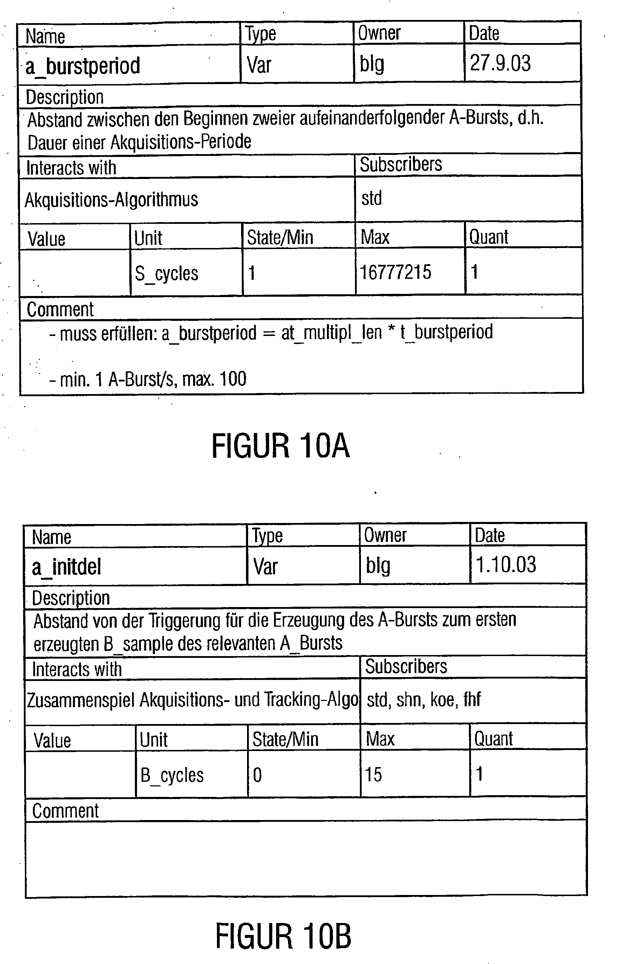

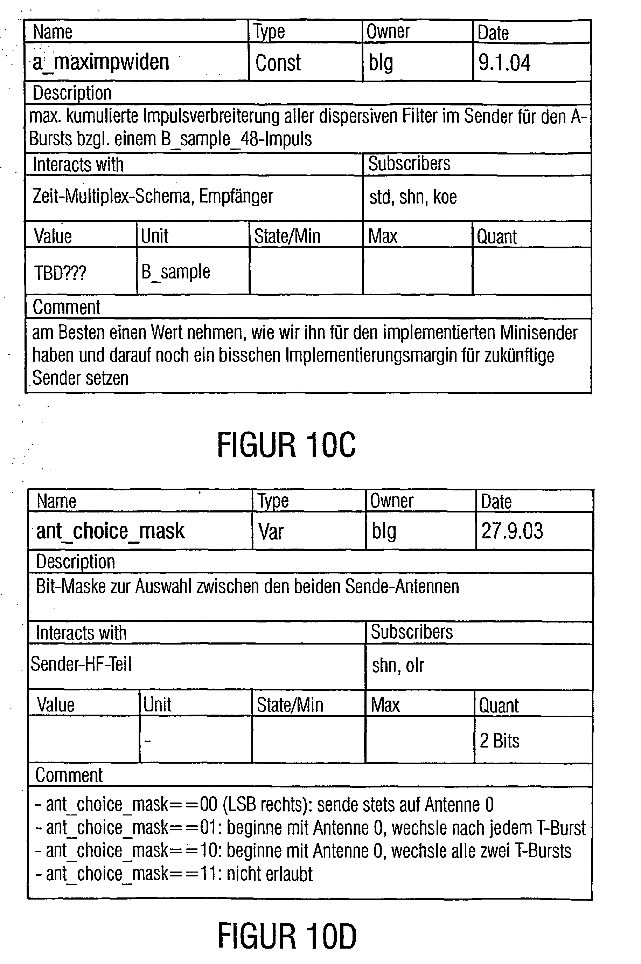

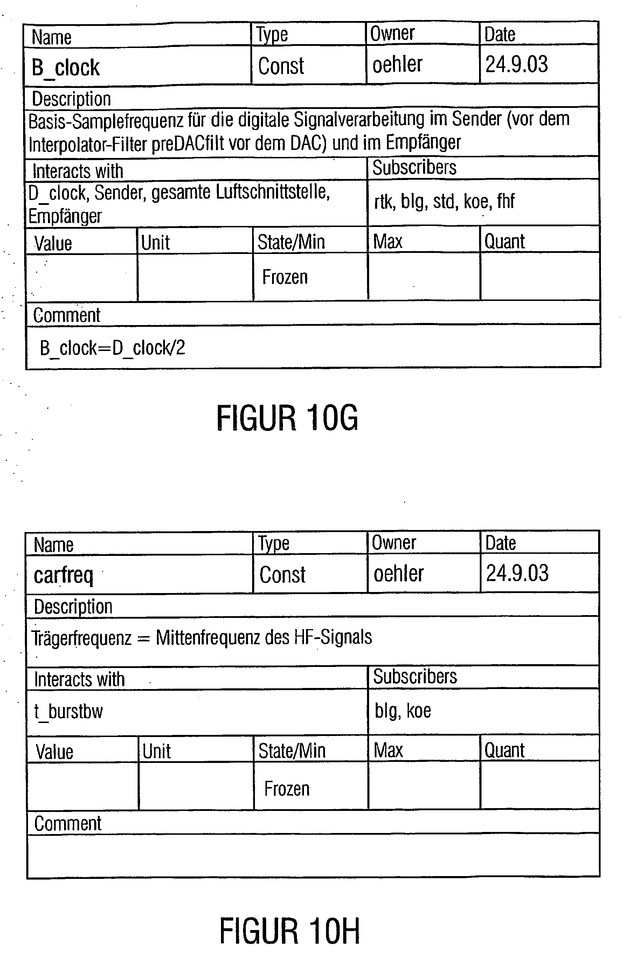

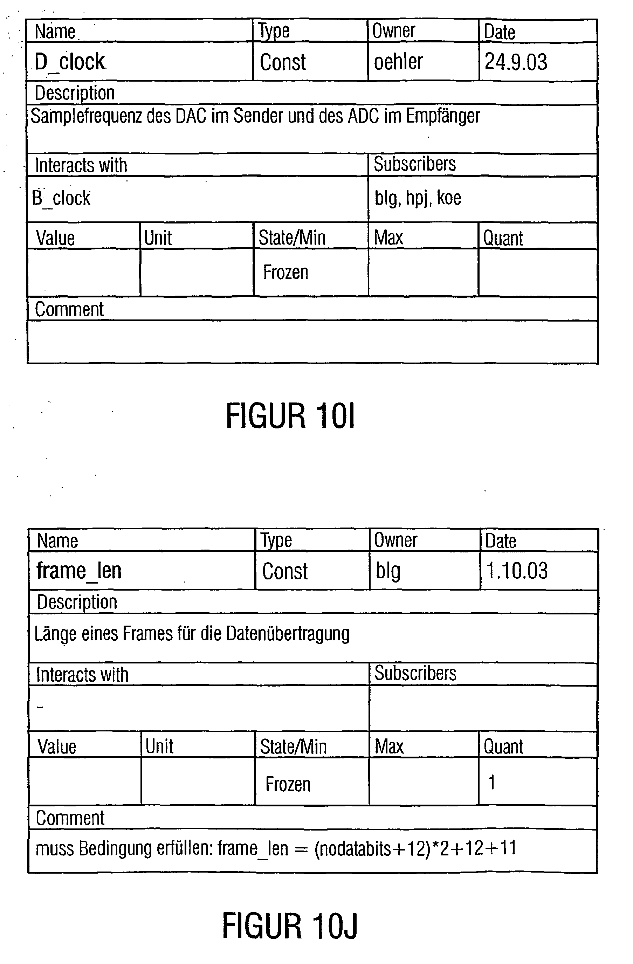

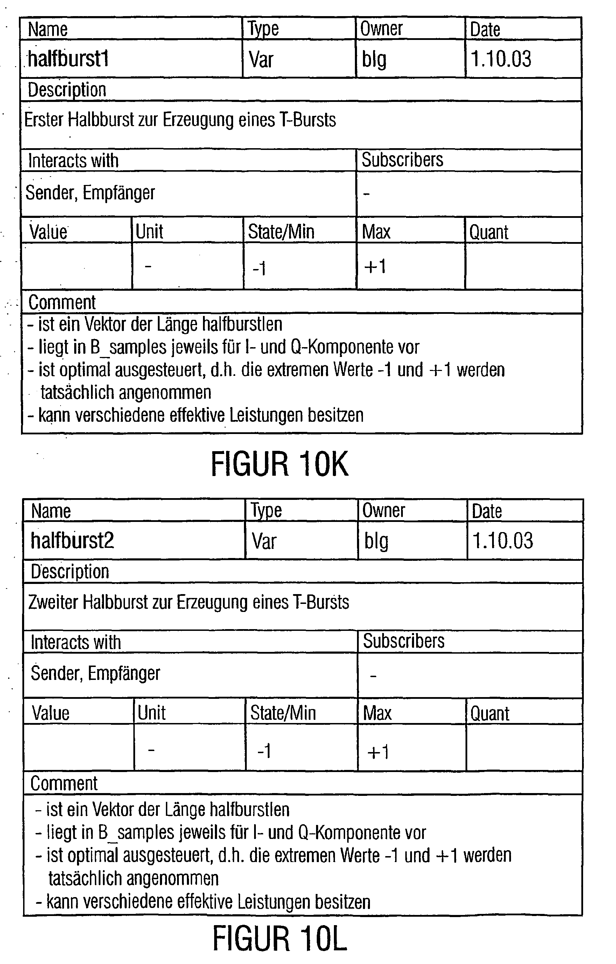

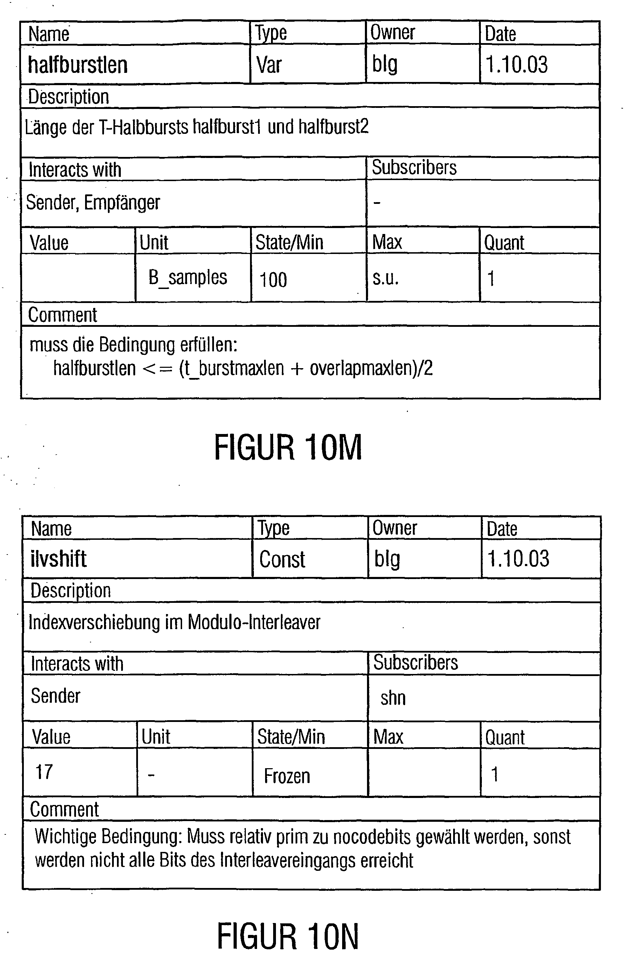

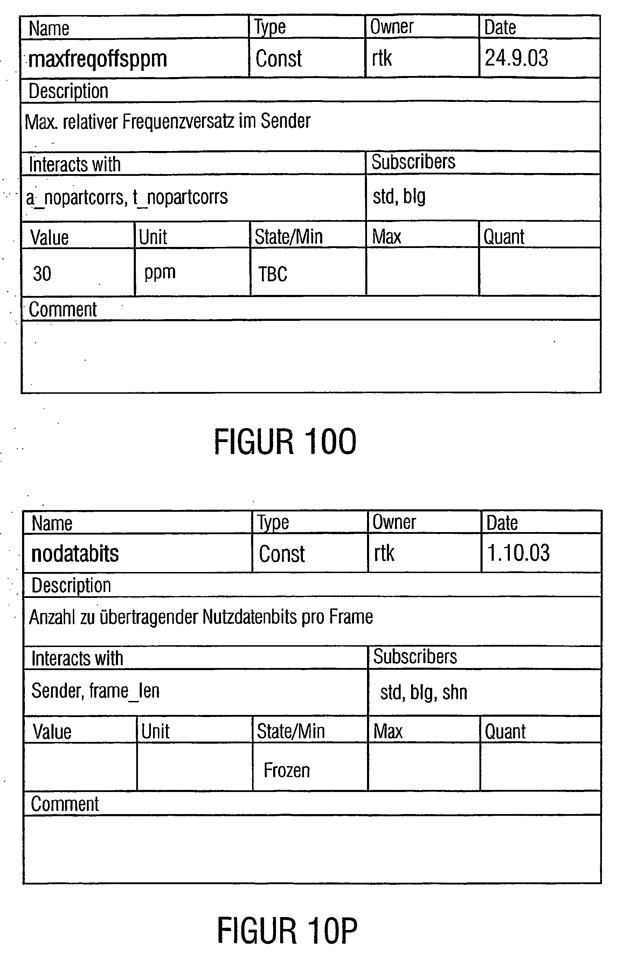

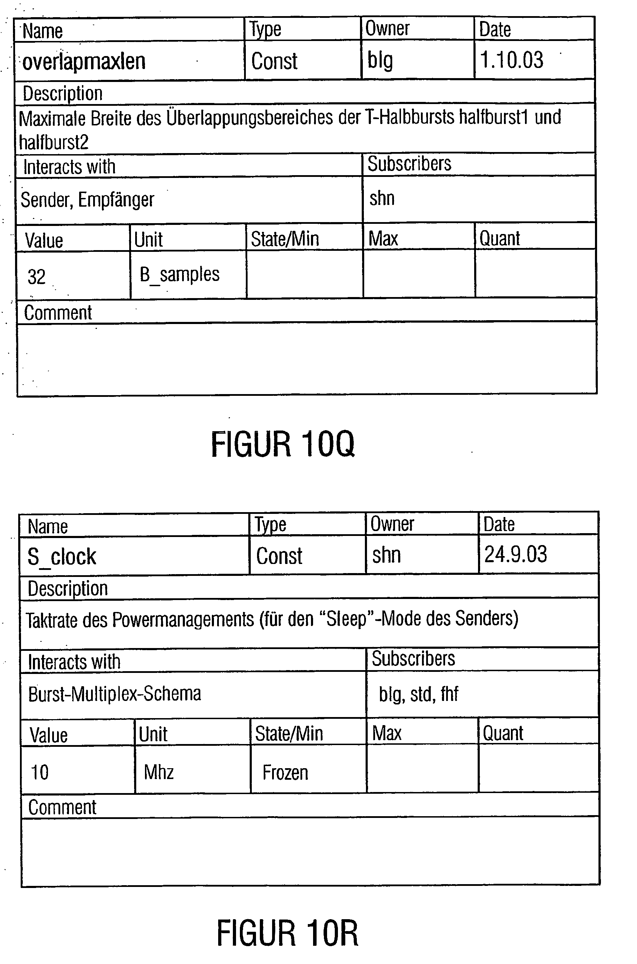

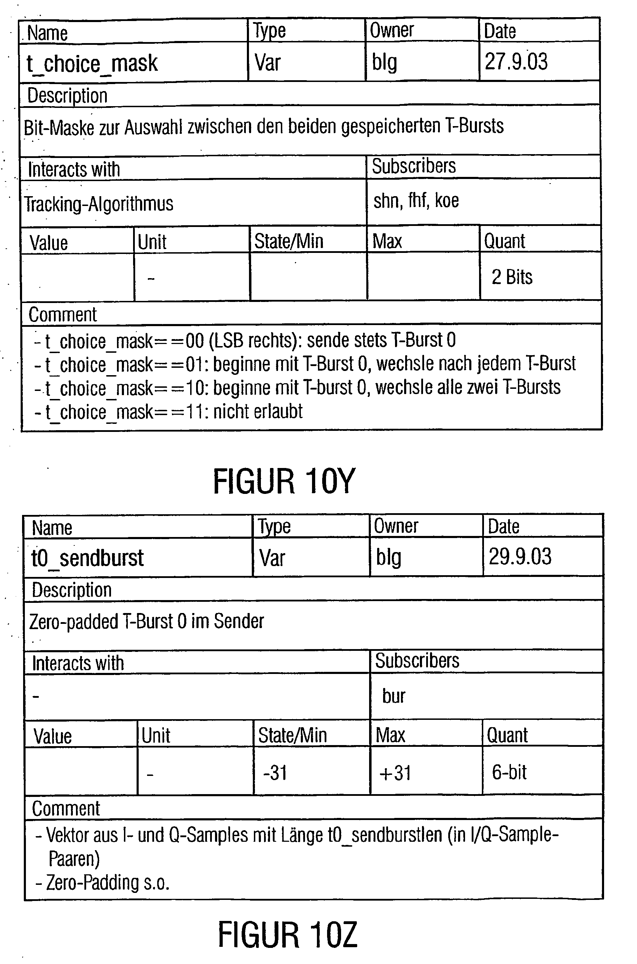

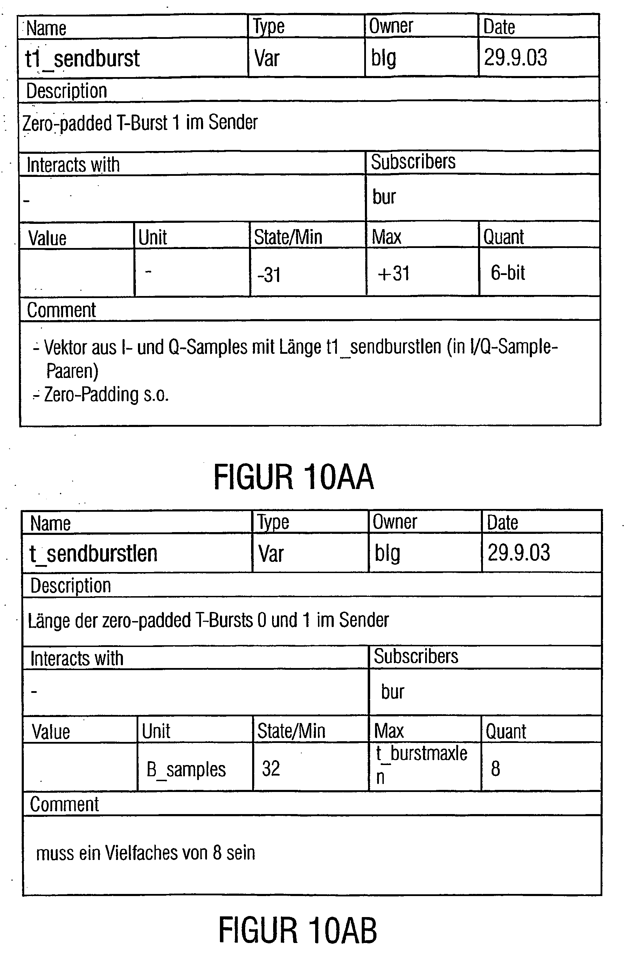

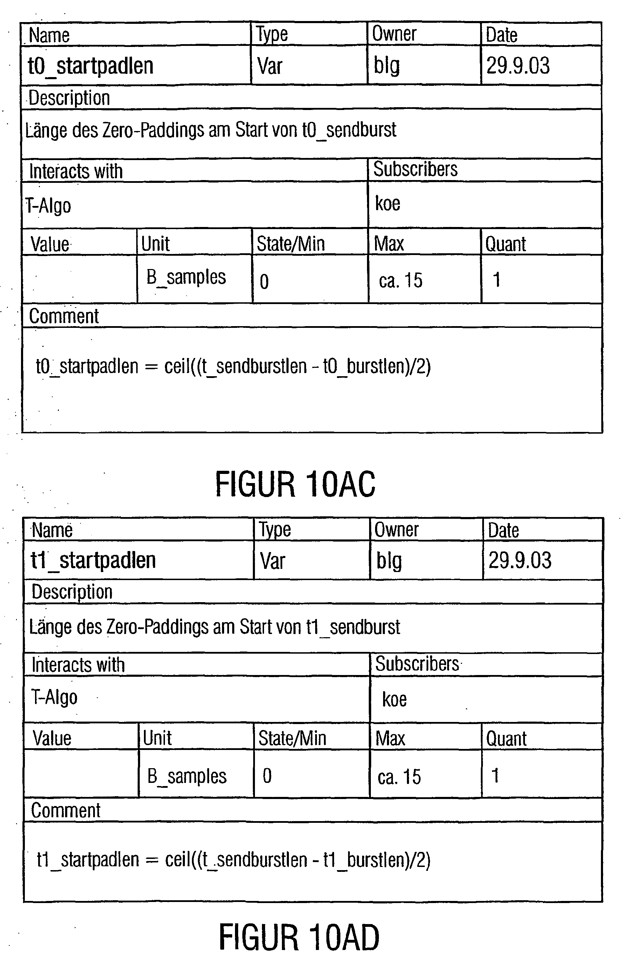

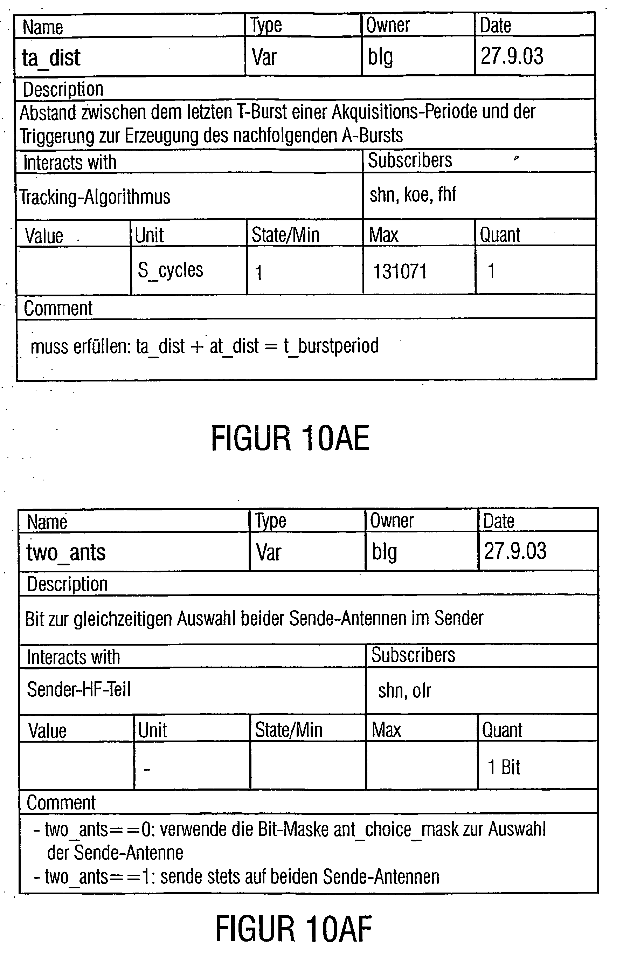

Das in Fig. 10 gezeichnete Schema visualisiert den Multiplex, die Burstdauern und die Abstände.

Alle anhand von Fig. 10 angegebenen Zeitverhältnisse gelten im Multiplexer, der im Sender zwischen dem A- und dem T-Burst hin- und herschaltet.

Die A- und T-Bursts liegen an dieser Stelle also beide in B_samples vor.

Alle Zeitangaben gelten immer für den relevanten A-Burst.

Wenn im folgenden von T-Burst die Rede ist, dann ist damit einer der zwei einprogrammierten T-Bursts gemeint.

Fig. 10 zeigt Zeitdauern und Abstände im Burst-Multiplex

Der relevante A-Burst besitzt die Länge a_burstlen, in B_cycles_48, was kürzer als die maximale Länge a_burstmaxlen in B_cycles_48 des rel. A-Bursts sein muss.

Der T-Burst besitzt die Länge t_burstlen in B_cycles, was kürzer als die maximale T-Burst-Länge t_burstmaxlen, in B_cycles sein muss.

Die Pause zwischen dem hinteren Ende des rel. A-Bursts und dem Beginn des T-Bursts sollte einen festen Wert behalten, auch wenn A- und/oder T- Bursts unterschiedlicher Längen im System verwendet werden. Wenn der rel. A-Burst kürzer oderlänger gemacht wird, dann sollte also nur sein Beginn, vorderer Anschlag, entsprechend verschoben werden. Wenn der T-Burst kürzer oder länger gemacht wird, dann sollte sich also nur sein hinterer Anschlag entsprechend verschieben.

Der Abstand vom Beginn des rel. A-Bursts zum Beginn des nachfolgenden T-Bursts ist mithilfe von zwei Parametern einstellbar. Der Abstand at_dist von der Triggerung für die Erzeugung des A-Bursts bis zum Beginn des nachfolgenden T-Bursts ist einstellbar in der Einheit S_cycles. Weiterhin ist die initiale Verzögerung a_initdel von der Triggerung bis zum Beginn des rel. A-Burst, nach obiger Definition, in der Einheit B_cycles einstellbar. Der tatsächliche Abstand vom Beginn des rel. A-Bursts zum Beginn des T-Bursts ist somit at_dist [S_cycles]-a_initdel [B_cycles].

Der Abstand at_dist liegt aus Implementierungsgründen in der Einheit S_cycles vor.

Der Abstand t_burstperiod zwischen den Beginnen zweier aufeinanderfolgender T-Bursts einer Akquisitionsperiode ist aus Implementierungsgründen ebenfalls einstellbar in der Einheit S_cycles.

Die drei Burst-Abstände sind nicht frei einstellbar sondern müssen der folgenden Forderung genügen:

$$\text{ta\_dist} + \text{at\_dist} = \text{t\_burstperiod.}$$

Der Abstand a_burstperiod zwischen den Beginnen der A-Bursts zweier aufeinanderfolgender Akquisitions-Perioden ist im Sender nicht einstellbar, sondern ergibt sich durch die anderen einstellbaren Parameter:

$$\text{a\_burstperiod[S\_cycles]=at\_multipl\_len*t\_burstperiod}$$
$$\text{[S\_cycles]}$$

Nach einem zugrundeliegenden Schema, das auf einem "Primzahlenalgorithmus" basiert, werden dem Sender feste Burstwiederholraten zugewiesen, die aber von Sender zu Sender leicht unterschiedlich sind, nicht synchronisierte Pseudozufallsmuster. Dies ist also ein Verfahren, nach dem die Burstabstände eines Senders zufällig gewählt werden, damit es kein festes Pattern von Burstüberlagerungen gibt.

Von den zwei im Sender gespeicherten T-Bursts wird immer einer zur Ausstrahlung ausgewählt. Die Auswahl erfolgt mittels eines Bits t_choice, welches mithilfe einer programmierbaren Maske t_choice_mask aus dem Zähler at_multipl_cntr gemäß der folgenden Vorschrift gewonnen wird:

```
t_choice = (t_choice_mask[0] AND at_multipl_cntr[0]) OR
           (t_choice_mask[1] AND at_multipl_cntr[1].
```

Hierbei stellt variable[0] das Bit Nr. 0 (d.h., das LSB) einer Variablen dar und variable[1] das Bit Nr. 1, und weiterhin stellt AND bzw. OR das bitweise UND bzw. ODER dar.

Besitzt t_choice den Wert 0, so wird der T-Burst 0 ausgestrahlt, bei t_choice==1 wird der T-Burst 1 ausgestrahlt.

Für t_choice_mask==00 (LSB rechts) wird somit stets der T-Burst 0 ausgestrahlt.

Für t_choice_mask==01 wird nach jedem T-Burst zwischen T-Burst 0 und T-Burst 1 gewechselt, beginnend mit T-Burst 0 nach dem A-Burst.

Für t_choice_mask==10 wird nach jedem zweiten T-Burst zwischen T-Burst 0 und T-Burst 1 gewechselt, beginnend mit T-Burst 0 nach dem A-Burst, d.h. es wird ausgestrahlt: T-Burst 0, T-Burst 0, T-Burst 1, T-Burst 1, T-Burst 0, T-Burst 0, T-Burst 1, ....

t_choice_mask==11 ist keine sinnvolle Wahl und darf nicht eingestellt werden.

Im Sender können zwei Sende-Antennen vorhanden sein. Es können entweder beide gleichzeitig verwendet werden oder nur eine von beiden ausgewählt werden. Sollen beide verwendet werden, so wird ein programmierbares Bit two_ants (gezeigt in Fig. 16af) auf den Wert 1 gesetzt. Ist two_ants==0, so wird immer nur eine der beiden Sende-Antennen zur Ausstrahlung ausgewählt. Die Auswahl erfolgt mittels eines Bits ant_choice, welches mithilfe einer programmierbaren Maske ant_choice_mask (gezeigt in Fig. 16d) aus dem Zähler at_multipl_cntr gemäß der folgenden Vorschrift gewonnen wird:

```
ant_choice = (ant_choice_mask[0] AND at_multipl_cntr[0])

OR

           (ant_choice_mask[1] AND at_multipl_cntr[1]).
```

Hierbei stellt variable[0] das Bit Nr. 0, d.h. das LSB, einer Variablen dar und variable[1] das Bit Nr. 1, und weiterhin stellt AND bzw. OR das bitweise UND bzw. ODER dar.

Besitzt ant_choice den Wert 0, so wird auf Antenne 0 ausgestrahlt, bei ant_choice==1 wird auf Antenne 1 ausgestrahlt.

Dies gilt jedoch nur für two_ants==0. Bei two_ants==1 wird jeder Burst auf beiden Antennen ausgestrahlt. Für two_ants==0 ergibt sich folgendes Schema:

Für ant_choice_mask==00 (LSB rechts) wird somit stets auf Antenne 0 ausgestrahlt.

Für ant_choice_mask==01 wird nach jedem T-Burst zwischen Antenne 0 und Antenne 1 gewechselt, beginnend mit Antenne 0 für den A-Burst und den nachfolgenden T-Burst.

Für ant_choice_mask==10 wird nach jedem zweiten T-Burst zwischen Antenne 0 und Antenne 1 gewechselt, beginnend mit Antenne 0 für den A-Burst und den nachfolgenden T-Burst, d.h. es wird nacheinander ausgestrahlt auf: Antenne 0, Antenne 0, Antenne 1, Antenne 1, Antenne 0, Antenne 0, Antenne 1, ....

ant_choice_mask==11 ist keine sinnvolle Wahl und darf nicht eingestellt werden.

Die Fig. 10a - 10af definieren die in dem vorangegangenen Ausführungsbeispiel definierten Variablen.

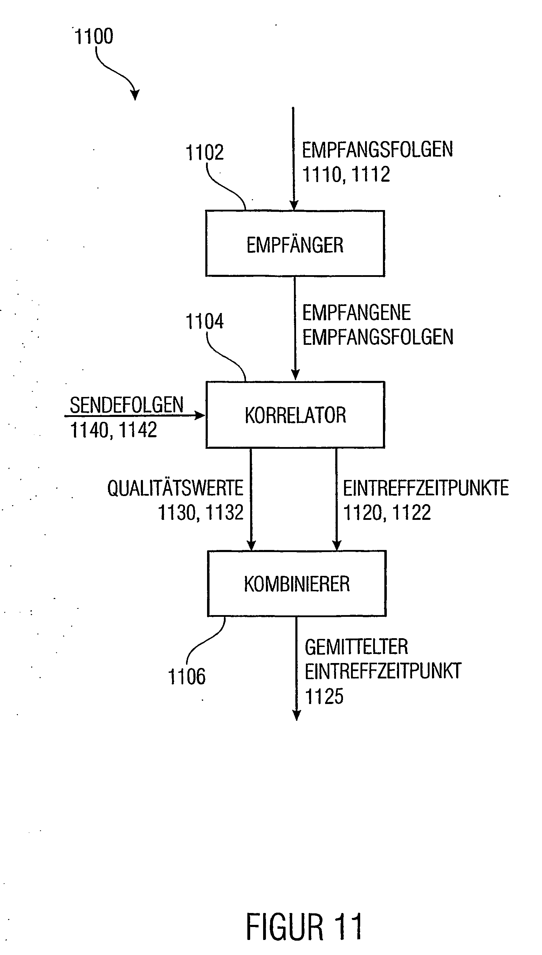

Fig. 11 zeigt ein Blockschaltbild einer Empfangseinrichtung gemäß einem Ausführungsbeispiel der vorliegenden Erfindung mit einem Empfänger 1102, einem Korrelator 1104 und einem Kombinierer 1106. Der Empfänger 1102 der Empfangsvorrichtung 1100 ist ausgebildet, um Empfangsfolgen eines Senders zu empfangen. In diesem Ausführungsbeispiel ist der Empfänger 1102 ausgebildet, um eine erste Empfangsfolge 1110 und eine zweite Empfangsfolge 1112 zu empfangen. Der Empfänger 1102 ist ausgebildet, um die empfangenen Empfangsfolgen an den Korrelator bereitzustellen. Der Korrelator 1104 ist ausgebildet, um einen ersten Eintreffzeitpunkt 1120 der ersten Empfangsfolge 1110 in der Empfangsvorrichtung 1100 und einen zweiten Eintreffzeitpunkt 122 der zweiten Empfangsfolge 1112 in der Empfangseinrichtung 1100 zu bestimmen und an den Kombinierer 106 bereitzustellen. Der Kombinierer 1106 ist ausgebildet, um die Eintreffzeitpunkte 1120, 1122 miteinander zu kombinieren und einen kombinierten Eintreffzeitpunkt, in diesem Fall einen gemittelten Eintreffzeitpunkt 1125, zu bestimmen und zur weiteren Verarbeitung bereitzustellen.

Gemäß einem Ausführungsbeispiel werden im Empfänger nur noch diejenigen Eintreffzeitpunkte 1120, 1122 weiter verwendet, die hohe Qualitätswerte besitzen. Alternativ werden die Qualitätswerte 1130, 1132 im Kombinierer 1106 über eine Gewichtung bei der Berechnung des gemittelten Eintreffzeitpunktes 1125 berücksichtigt. Das heißt, der Gewichtungskoeffizient hängt von den beiden Qualitätswerten 1130, 1132 ab. Je besser die Qualität der Empfangsfolgen 1110, 1112, bzw. der daraus bestimmten Eintreffzeitpunkte 1120, 1122, umso höher fällt die Gewichtung bei einer Mittelung zur Bestimmung des gemittelten Eintreffzeitpunktes 125 aus.

Der gemittelte Eintreffzeitpunkt 1125 kann aus einer arithmetischen Mittelung aus den Eintreffzeitpunkten 1120, 1122 erfolgen. Werden die Qualitätswerte 1130, 1132 bei der Ermittlung des gemittelten Eintreffzeitpunktes 1125 berücksichtigt, so kann die Ermittlung des gemittelten Eintreffzeitpunktes 1125 aus einer arithmetischen Mittelung aus den gewichteten Eintreffzeitpunkten bestimmt werden. Dazu kann der erste Eintreffzeitpunkt 1120 mit dem ersten Qualitätswert 1130 und der zweite Eintreffzeitpunkt 1122 mit dem zweiten Qualitätswert 1132 gewichtet werden.

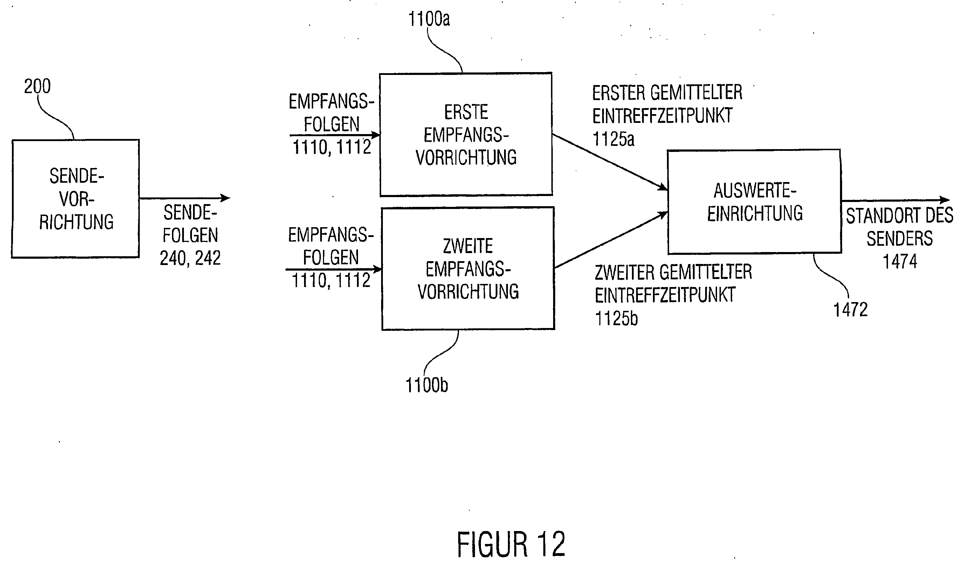

Für eine Navigationsanwendung zur Bestimmung des Senderstandortes können mehrere der in Fig. 11 gezeigten Empfangseinrichtungen 1100 miteinander kombiniert werden. Ein solches Ortungssystem kann dann eine der in den Fig. 2 und 3 gezeigten Sendevorrichtungen 200 sowie ein Empfängersystem bestehend aus einer Mehrzahl der in Fig. 1 gezeigten Empfangseinrichtungen 100 bestehen. Ein solches System zur Bestimmung eines Standortes der Sendevorrichtung 200 ist in Fig. 12 gezeigt.

Gemäß diesem Ausführungsbeispiel weist das Empfängersystem eine erste Empfangseinrichtung 1100a und eine zweite Empfangseinrichtung 1100b auf. Beide Empfangseinrichtungen 1100a, 1100b sind ausgebildet, um die erste Empfangsfolge 110 und die zweite Empfangsfolge 1112 zu empfangen. Die Empfangsfolgen 1110, 1112 entsprechen den Sendefolgen 1240, 1242, die von der Sendevorrichtung 1200 ausgestrahlt wurden und über Übertragungskanäle an die Empfangseinrichtungen 1100a, 1100b übertragen wurden. Die erste Empfangseinrichtung 1100a ist ausgebildet, um einen ersten gemittelten Eintreffzeitpunkt 1125a an eine Auswerteeinrichtung 1472 bereitzustellen und die zweite Empfangseinrichtung 1100b ist ausgebildet, um einen zweiten gemittelten Eintreffzeitpunkt 1125b an die Auswerteeinrichtung 1472 bereitzustellen. Die Auswerteeinrichtung 1472 ist ausgebildet, um aus den gemittelten Eintreffzeitpunkten 1125a, 1125b den Standort des Senders 1474 zu ermitteln. Die Ermittlung des Standorts durch die Auswerteeinrichtung 1472 kann durch einen Vergleich der Laufzeiten der Empfangsfolgen 1110, 1112 von der Sendevorrichtung 1200 zu den Empfangseinrichtungen 1100a, 1100b erfolgen. Typischerweise weist ein Ortungssystem mehr als zwei Empfangsvorrichtungen auf.

Gemäß einem Ausführungsbeispiel weist das Empfängersystem einen Taktgenerator und einen Triggergenerator auf, dessen Signale über ein optisches Netzwerk an die Empfangseinrichtungen 1100a, 1100b bereitgestellt werden. Zweck des Triggers ist es, alle Eintreffzeitpunkt-Zeitzähler in den Empfangseinrichtungen 1100a, 1100b synchronisiert loslaufen zu lassen.

Bei der in Fig. 12 gezeigten Lokalisationsanwendung können wiederum Qualitätswerte zur Beurteilung des Mehrwegeeinflusses berechnet werden und zur Selektion der verwendeten Eintreffzeitpunkte benutzt werden.

Die in den Empfängern 1100a, 1100b geschätzten Eintreffzeitpunkte 1125a, 1125b werden in der Auswerteeinrichtung 1472 zur Berechnung des Standorts der Sendevorrichtung miteinander kombiniert.

Die beschriebenen Sendevorrichtungen, Empfangsvorrichtungen und Empfangseinrichtungen können miteinander kombiniert werden. Auch sind spezielle Merkmale, die nur für einzelne Ausführungsbeispiele beschrieben sind, auch auf entsprechende Ausführungsbeispiele übertragbar.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogramm auf einem Computer abläuft.

**Patentansprüche**

1. Empfangsvorrichtung zum Bestimmen eines Standortes einer Sendervorrichtung (200), mit folgenden Merkmalen:

   einer Auswerteeinrichtung (105), die ausgebildet ist, um aus einem Eintreffzeitpunkt (120) einer ersten Empfangsfolge (110) einen ersten Standort (128) der Sendervorrichtung und aus einem Eintreffzeitpunkt (122) einer zweiten Empfangsfolge (112) einen zweiten Standort (129) der Sendervorrichtung zu bestimmen, wobei die Empfangsfolgen (110, 112) übertragenen, unterschiedlichen Sendefolgen (240, 242) der Sendervorrichtung entsprechen; und
   einem Kombinierer (106), der ausgebildet ist, um den Standort (105) der Sendervorrichtung aus dem ersten Standort und dem zweiten Standort zu bestimmen.

2. Empfangsvorrichtung gemäß Anspruch 1 oder 2 ferner mit:

einem Empfänger (102), der ausgebildet ist, um die erste Empfangsfolge (110) und die zweite Empfangsfolge (112) zu empfangen, wobei jede der Empfangsfolgen eine Mehrzahl aufeinanderfolgender Werte aufweist, und wobei der Empfänger einen Korrelator (104) aufweist, der ausgebildet ist, um den Eintreffzeitpunkt (120) der ersten Empfangsfolge und den Eintreffzeitpunkt (122) der zweiten Empfangsfolge zu bestimmen.

3. Empfangsvorrichtung gemäß Anspruch 1, wobei der Kombinierer (104) ausgebildet ist, um den Standort (115) aus einer arithmetischen Mittelung des ersten Standorts (128) und des zweiten Standorts (129) zu bestimmen.

4. Empfangsvorrichtung gemäß einem der vorangegangenen Ansprüche, wobei der Korrelator (104) ausgebildet ist, um einen ersten Qualitätswert (130) der ersten Empfangsfolge (110) und einen zweiten Qualitätswert (132) der zweiten Empfangsfolge (112) zu bestimmen, und wobei der Kombinierer (106) ausgebildet ist, um die Qualitätswerte über eine Gewichtung bei der Bestimmung des Standorts (115) einzubeziehen.

5. Empfangsvorrichtung gemäß Anspruch 4, wobei der Kombinierer (106) ausgebildet ist, um den ersten Standort (128) mit dem ersten Qualitätswert (130) und den zweiten Standort (129) mit dem zweiten Qualitätswert (132) zu gewichten und den Standort (115) aus einer Mittelung des gewichteten ersten Standortes und des gewichteten zweiten Standortes zu bestimmen.

6. Empfangsvorrichtung gemäß einem der Ansprüche 4 oder 5, wobei der Korrelator (104) ausgebildet ist, um ein Signal-zu-Rauschen-Verhältnis der Empfangsfolgen (110, 112) zu bestimmen und als Qualitätswert (130, 132) bereitzustellen.

7. Empfangsvorrichtung gemäß einem der Ansprüche 4 oder 5, wobei der Korrelator (104) ausgebildet ist, um einen Mehrwegeeinfluss auf die Empfangsfolgen (110, 112) zu bestimmen und als Qualitätswert (130, 132) bereitzustellen.

8. Empfangsvorrichtung gemäß einem der vorangegangenen Ansprüche, wobei der Korrelator (104) ausgebildet ist, um den ersten Eintreffzeitpunkt (120) aus einer Korrelation der ersten Empfangsfolge (110) mit einer ersten Sendefolge (140) und dem zweiten Eintreffzeitpunkt (122) aus einer Korrelation der zweiten Empfangsfolge (112) mit einer zweiten Sendefolge (142) zu bestimmen.

9. Empfangsvorrichtung gemäß Anspruch 8, wobei die erste Empfangsfolge (110) und die zweite Empfangsfolge (112) in einer vorbestimmten Abfolge am Empfänger (102) eintreffen, und wobei der Korrelator (104) ausgebildet ist, um die erste Sendefolge (140) und die zweite Sendefolge (142) in der vorbestimmten Abfolge bereitzustellen.

10. Empfangsvorrichtung gemäß einem der Ansprüche 8 oder 9, wobei der Empfänger (102) ausgebildet ist, um eine Synchronisationsfolge zu empfangen, und wobei der Korrelator (104) ausgebildet ist, um ansprechend auf einen Empfang der Synchronisationsfolge die erste Sendefolge (140) und die zweite Sendefolge (142) in der vorbestimmten Abfolge zur Korrelation bereitzustellen.

11. Empfangsvorrichtung gemäß einem der Ansprüche 2 bis 10, wobei sich die aufeinanderfolgenden Werte der ersten Empfangsfolge (110) von den aufeinanderfolgenden Werten der zweiten Empfangsfolge (112) unterscheiden.

12. Empfangsvorrichtung gemäß einem der vorangegangenen Ansprüche, wobei die erste Empfangsfolge (110) und die zweite Empfangsfolge (112) unterschiedliche spektrale Eigenschaften aufweisen.

13. Empfangsvorrichtung gemäß einem der vorangegangenen Ansprüche, wobei die erste Empfangsfolge (110) und/oder die zweite Empfangsfolge (112) einem differenzierten Gauss-Sendeimpuls, einem bandbegrenzten Gauss-Sendeimpuls oder einem Root Raised Cosine-Burst entspricht.

14. Empfangsvorrichtung gemäß einem der vorangegangenen Ansprüche, wobei der Empfänger ferner ausgebildet ist, um eine weitere Empfangsfolge zu empfangen, und wobei der Korrelator ausgebildet ist, um einen weiteren Eintreffzeitpunkt der weiteren Empfangsfolge zu bestimmen, und wobei die Auswerteeinrichtung ausgebildet ist, um aus dem Eintreffzeitpunkt der weiteren Empfangsfolge einen weiteren Standort der Sendervorrichtung zu bestimmen, und wobei der Kombinierer ausgebildet ist, um den Standort der Sendervorrichtung aus dem ersten, dem zweiten, und dem weiteren Standort zu bestimmen.

**15.** Empfangsvorrichtung gemäß einem der vorangegangenen Ansprüche, wobei die Auswerteeinrichtung (105) ausgebildet ist, um aus dem Eintreffzeitpunkt (120) der ersten Empfangsfolge und aus einem weiteren Eintreffzeitpunkt (124) der ersten Empfangsfolge (110) den ersten Standort (128) der Sendervorrichtung (200) und aus dem Eintreffzeitpunkt (122) der zweiten Empfangsfolge (112) und aus einem weiteren Eintreffzeitpunkt (126) der zweiten Empfangsfolge (112) den zweiten Standort (129) der Sendervorrichtung zu bestimmen.

**16.** Empfangsvorrichtung gemäß Anspruch 15, mit einem weiteren Empfänger (102), der ausgebildet ist, um die erste Empfangsfolge (110) und die zweite Empfangsfolge (112) zu empfangen, wobei der weitere Empfänger einen weiteren Korrelator (104) aufweist, der ausgebildet ist, um den weiteren Eintreffzeitpunkt (124) der ersten Empfangsfolge und den weiteren Eintreffzeitpunkt (126) der zweiten Empfangsfolge zu bestimmen.

**17.** Kommunikationssystem mit folgenden Merkmalen:

einer Empfangsvorrichtung gemäß einem der Ansprüche 1 bis 16; und
einer Sendevorrichtung (200) mit einem Sender (252) zum Aussenden einer ersten Sendefolge (240) und einer zweiten Sendefolge (242), wobei die Empfangsfolgen (110, 112) den übertragenen Sendefolgen entsprechen.

**18.** Kommunikationssystem gemäß Anspruch 17, wobei die Sendevorrichtung eine erste Antenne (254) aufweist und wobei der Sender (152) ausgebildet ist, um die erste Sendefolge (240) und die zweite Sendefolge (242) gemäß einer vorbestimmten Abfolge über die erste Antenne auszusenden.

**19.** Kommunikationssystem gemäß Anspruch 15, wobei die Sendevorrichtung eine erste Antenne (254) und eine zweite Antenne (256) aufweist und wobei der Sender (252) ausgebildet ist, um gemäß einer vorbestimmten Abfolge, die erste Sendefolge (240) über die erste Antenne und die zweite Sendefolge (242) über die zweite Antenne auszusenden.

**20.** Verfahren zum Bestimmen eines Standortes einer Sendervorrichtung (200), das folgende Schritte aufweist:

Empfangen eines ersten Eintreffzeitpunktes (120) einer ersten Empfangsfolge (110) und eines zweiten Eintreffzeitpunktes (122) einer zweiten Empfangsfolge (112), wobei die Empfangsfolgen (110, 112) übertragenen, unterschiedlichen Sendefolgen (240, 242) der Sendevorrichtung entsprechen;
Bestimmen eines ersten Standorts (128) der Sendervorrichtung aus dem Eintreffzeitpunkt der ersten Empfangsfolge und eines zweiten Standorts (129) der Sendervorrichtung aus dem Eintreffzeitpunkt der zweiten Empfangsfolge; und
Bestimmen des Standortes (115) der Sendervorrichtung aus dem ersten und dem zweiten Standort.

**21.** Computerprogramm mit Programmcode zur Durchführung des Verfahrens nach Anspruch 20, wenn das Computerprogramm auf einem Computer abläuft.

**Claims**

**1.** A receive device for determining a location of a transmitter device (200), comprising:

an evaluation means (105) configured to determine a first location (128) of the transmitter device from a time of arrival (120) of a first receive sequence (110), and a second location (129) of the transmitter device from a time of arrival (122) of a second receive sequence (112), the receive sequences (110, 112) corresponding to different transmitted transmit sequences (240, 242) of the transmit device; and
a combiner (106) configured to determine the location (105) of the transmitter device from the first location and the second location.

**2.** The receive device as claimed in claims 1 or 2, further comprising:

a receiver (102) configured to receive the first receive sequence (110) and the second receive sequence (112), each of the receive sequences comprising a plurality of successive values, and the receiver comprising a correlator (104) configured to determine the time of arrival (120) of the first receive sequence and the time of arrival (122) of the second receive sequence.

3. The receive device as claimed in claim 1, wherein the combiner (104) is configured to determine the location (115) from an arithmetic averaging of the first location (128) and the second location (129).

4. The receive device as claimed in any of the previous claims, wherein the correlator (104) is configured to determine a first quality value (130) of the first receive sequence (110) and a second quality value (132) of the second receive sequence (112), and wherein the combiner (106) is configured to include the quality values in the determination of the location (115) by means of weighting.

5. The receive device as claimed in claim 4, wherein the combiner (106) is configured to weight the first location (128) with the first quality value (130), and the second location (129) with the second quality value (132), and to determine the location (115) from averaging the weighted first location and the weighted second location.

6. The receive device as claimed in any of claims 4 or 5, wherein the correlator (104) is configured to determine a signal/noise ratio of the receive sequences (110, 112) and to provide same as a quality value (130, 132).

7. The receive device as claimed in any of claims 4 or 5, wherein the correlator (104) is configured to determine a multipath influence on the receive sequences (110, 112) and to provide same as a quality value (130, 132).

8. The receive device as claimed in any of the previous claims, wherein the correlator (104) is configured to determine the first time of arrival (120) from a correlation of the first receive sequence (110) with a first transmit sequence (140), and the second time of arrival (122) from a correlation of the second receive sequence (112) with a second transmit sequence (142).

9. The receive device as claimed in claim 8, wherein the first receive sequence (110) and the second receive sequence (112) arrive at the receiver (102) in a predetermined succession, and wherein the correlator (104) is configured to provide the first transmit sequence (140) and the second transmit sequence (142) in the predetermined succession.

10. The receive device as claimed in any of claims 8 or 9, wherein the receiver (102) is configured to receive a synchronization sequence, and wherein the correlator (104) is configured to provide, in response to reception of the synchronization sequence, the first transmit sequence (140) and the second transmit sequence (142) in the predetermined succession for correlation.

11. The receive device as claimed in any of claims 2 to 10, wherein the successive values of the first receive sequence (110) differ from the successive values of the second receive sequence (112).

12. The receive device as claimed in any of the previous claims, wherein the first receive sequence (110) and the second receive sequence (112) comprise different spectral properties.

13. The receive device as claimed in any of the previous claims, wherein the first receive sequence (110) and/or the second receive sequence (112) corresponds to a differentiated Gauss transmit pulse, a bandlimited Gauss transmit pulse or a root raised cosine burst.

14. The receive device as claimed in any of the previous claims, wherein the receiver is further configured to receive a further receive sequence, and wherein the correlator is configured to determine a further time of arrival of the further receive sequence, and wherein the evaluation means is configured to determine a further location of the transmitter device from the time of arrival of the further receive sequence, and wherein the combiner is configured to determine the location of the transmitter device from the first, second and further locations.

15. The receive device as claimed in any of the previous claims, wherein the evaluation means (105) is configured to determine the first location (128) of the transmitter device (200) from the time of arrival (120) of the first receive sequence and from a further time of arrival (124) of the first receive sequence (110), and to determine the second location (129) of the transmitter device from the time of arrival (122) of the second receive sequence (112) and from a further time of arrival (126) of the second receive sequence (112).

16. Receive device as claimed in claim 15, comprising a further receiver (102) configured to receive the first receive sequence (110) and the second receive sequence (112), the further receiver comprising a further correlator (104) configured to determine the further time of arrival (124) of the first receive sequence, and the further time of arrival (126) of the second receive sequence.

17. A communication system comprising:

a receive device as claimed in any of claims 1 to 16; and
a transmit device (200) comprising a transmitter (252) for sending out a first transmit sequence (240) and a second transmit sequence (242), the receive sequences (110, 112) corresponding to the transmit sequences transmitted.

18. The communication system as claimed in claim 17, wherein the transmit device comprises a first antenna (254), and wherein the transmitter (152) is configured to send out the first transmit sequence (240) and the second transmit sequence (242) via the first antenna in accordance with a predetermined succession.

19. The communication system as claimed in claim 15, wherein the transmit device comprises a first antenna (254) and a second antenna (256), and wherein the transmitter (252) is configured to send out, in accordance with a predetermined succession, the first transmit sequence (240) via the first antenna and the second transmit sequence (242) via the second antenna.

20. A method for determining a location of a transmitter device (200), comprising:

receiving a first time of arrival (120) of a first receive sequence (110), and a second time of arrival (122) of a second receive sequence (112), the receive sequences (110, 112) corresponding to different transmitted transmit sequences (240, 242) of the transmit device;
determining a first location (128) of the transmitter device from the time of arrival of the first receive sequence, and a second location (129) of the transmitter device from the time of arrival of the second receive sequence; and
determining the location (115) of the transmitter device from the first and second locations.

21. A computer program comprising a program code for performing the method as claimed in claim 20, when the computer program runs on a computer.

**Revendications**

1. Dispositif de réception pour déterminer l'emplacement d'un dispositif émetteur (200), présentant les caractéristiques suivantes :

un dispositif d'interprétation (105) qui est conçu pour déterminer, à partir d'un instant d'arrivée (120) d'une première séquence de réception (110), un premier emplacement (128) du dispositif émetteur et, à partir d'un instant d'arrivée (122) d'une deuxième séquence de réception (112), un second emplacement (129) du dispositif émetteur, les séquences de réception (110, 112) correspondant à des séquences d'émission (240, 242) différentes transmises par le dispositif émetteur ; et
un combinateur (106) qui est conçu pour déterminer l'emplacement (105) du dispositif émetteur à partir du premier emplacement et du second emplacement.

2. Dispositif de réception selon la revendication 1 ou 2, comprenant en outre :

un récepteur (102) qui est conçu pour recevoir la première séquence de réception (110) et la seconde séquence de réception (112), chacune des séquences de réception comportant une pluralité de valeurs successives, et le récepteur comportant un corrélateur (104) qui est conçu pour déterminer l'instant d'arrivée (120) de la première séquence de réception et l'instant d'arrivée (122) de la seconde séquence de réception.

3. Dispositif de réception selon la revendication 1, dans lequel le combinateur (104) est conçu pour déterminer l'emplacement (115) à partir d'une moyenne arithmétique du premier emplacement (128) et du second emplacement (129).

4. Dispositif de réception selon l'une quelconque des revendications 1 à 3, dans lequel le corrélateur (104) est conçu pour déterminer une première valeur de qualité (130) de la première séquence de réception (110) et une seconde valeur de qualité (132) de la seconde séquence de réception (112), et dans lequel le combinateur (106) est conçu pour inclure les valeurs de qualité, par une pondération, lors de la détermination de l'emplacement (115).

5. Dispositif de réception selon la revendication 4, dans lequel le combinateur (106) est conçu pour pondérer le premier emplacement (128) avec la première valeur de qualité (130) et le second emplacement (129) avec la seconde valeur de qualité (132), et pour déterminer l'emplacement (115) à partir d'une moyenne du premier emplacement pondéré et du second emplacement pondéré.

6. Dispositif de réception selon l'une quelconque des revendications 4 ou 5, dans lequel le corrélateur (104) est conçu pour déterminer un rapport signal/bruit des séquences de réception (110, 112) et pour le fournir en tant que valeur de qualité (130, 132).

7. Dispositif de réception selon l'une quelconque des revendications 4 ou 5, dans lequel le corrélateur (104) est conçu pour déterminer une influence multivoie sur les séquences de réception (110, 112) et pour la fournir en tant que valeur de qualité (130, 132).

8. Dispositif de réception selon l'une quelconque des revendications 1 à 7, dans lequel le corrélateur (104) est conçu pour déterminer le premier instant d'arrivée (120) à partir d'une corrélation de la première séquence de réception (110) avec une première séquence d'émission (140), et le second instant d'arrivée (122) à partir d'une corrélation de la seconde séquence de réception (112) avec une seconde séquence d'émission (142).

9. Dispositif de réception selon la revendication 8, dans lequel la première séquence de réception (110) et la seconde séquence de réception (112) parviennent au récepteur (102) dans une succession prédéterminée, et dans lequel le corrélateur (104) est conçu pour fournir la première séquence d'émission (140) et la seconde séquence d'émission (142) dans la succession prédéterminée.

10. Dispositif de réception selon l'une quelconque des revendications 8 ou 9, dans lequel le récepteur (102) est conçu pour recevoir une séquence de synchronisation, et dans lequel le corrélateur (104) est conçu pour fournir pour la corrélation, en réponse à une réception de la séquence de synchronisation, la première séquence d'émission (140) et la seconde séquence d'émission (142) dans la succession prédéterminée.

11. Dispositif de réception selon l'une quelconque des revendications 2 à 10, dans lequel les valeurs se succédant de la première séquence de réception (110) diffèrent des valeurs se succédant de la seconde séquence de réception (112).

12. Dispositif de réception selon l'une quelconque des revendications 1 à 11, dans lequel la première séquence de réception (110) et la seconde séquence de réception (112) présentent des propriétés spectrales différentes.

13. Dispositif de réception selon l'une quelconque des revendications 1 à 12, dans lequel la première séquence de réception (110) et/ou la seconde séquence de réception (112) correspondent à une impulsion d'émission de Gauss différenciée, à une impulsion d'émission de Gauss à bande limitée ou à un burst root raised cosine.

14. Dispositif de réception selon l'une quelconque des revendications 1 à 13, dans lequel le récepteur est conçu en outre pour recevoir une autre séquence de réception, et dans lequel le corrélateur est conçu pour déterminer un autre instant d'arrivée de l'autre séquence de réception, et dans lequel le dispositif d'interprétation est conçu pour déterminer, à partir de l'instant d'arrivée de l'autre séquence de réception, un autre emplacement du dispositif émetteur, et dans lequel le combinateur est conçu pour déterminer l'emplacement du dispositif émetteur à partir du premier, du second et de l'autre emplacement.

15. Dispositif de réception selon l'une quelconque des revendications 1 à 14, dans lequel le dispositif d'interprétation (105) est conçu pour déterminer, à partir de l'instant d'arrivée (120) de la première séquence de réception et à partir d'un autre instant d'arrivée (124) de la première séquence de réception (110), le premier emplacement (128) du dispositif émetteur (200) et, à partir de l'instant d'arrivée (122) de la seconde séquence de réception (112) et à partir d'un autre instant d'arrivée (126) de la seconde séquence de réception (112), le second emplacement (129) du dispositif émetteur.

16. Dispositif de réception selon la revendication 15, avec un autre récepteur (102) qui est conçu pour recevoir la première séquence de réception (110) et la seconde séquence de réception (112), l'autre récepteur comportant un autre corrélateur (104) qui est conçu pour déterminer l'autre instant d'arrivée (124) de la première séquence de réception et l'autre instant d'arrivée (126) de la seconde séquence de réception.

17. Système de communication présentant les caractéristiques suivantes :

   un dispositif de réception selon l'une quelconque des revendications 1 à 16 ; et
   un dispositif émetteur (200) avec un émetteur (252) pour émettre une première séquence d'émission (240) et une seconde séquence d'émission (242), les séquences de réception (110, 112) correspondant aux séquences d'émission transmises.

18. Système de communication selon la revendication 17, dans lequel le dispositif émetteur comporte une première antenne (254) et dans lequel l'émetteur (152) est conçu pour émettre la première séquence d'émission (240) et la seconde séquence d'émission (242) selon une succession prédéterminée, à travers la première antenne.

19. Système de communication selon la revendication 15, dans lequel le dispositif émetteur comporte une première antenne (254) et une seconde antenne (256) et dans lequel l'émetteur (252) est conçu pour émettre, selon une succession prédéterminée, la première séquence d'émission (240) à travers la première antenne et la seconde séquence d'émission (242) à travers la seconde antenne.

20. Procédé pour déterminer l'emplacement d'un dispositif émetteur (200) qui comporte les étapes suivantes :

   recevoir un premier instant d'arrivée (120) d'une première séquence de réception (110) et un second instant d'arrivée (122) d'une seconde séquence de réception (112), les séquences de réception (110, 112) correspondant à des séquences d'émission (240, 242) différentes transmises par le dispositif émetteur ;
   déterminer un premier emplacement (128) du dispositif émetteur à partir de l'instant d'arrivée de la première séquence de réception et un second emplacement (129) du dispositif émetteur à partir de l'instant d'arrivée de la seconde séquence de réception ; et
   déterminer l'emplacement (115) du dispositif émetteur à partir du premier et du second emplacement.

21. Programme d'ordinateur avec code de programme pour la mise en oeuvre du procédé selon la revendication 20, lorsque le programme d'ordinateur tourne sur un ordinateur.

FIGUR 1

200

252

254

```
┌──────────┐                    ┌──────────┐
│          │  ZU SENDENDE       │          │   ZWEITE          ERSTE
│  SENDER  │─────────────────→  │ ANTENNE  │──── SENDEFOLGE ──────── SENDEFOLGE ────→
│          │  SENDEFOLGEN       │          │     242                 240
└──────────┘                    └──────────┘
```

FIGUR 2

EP 1 825 291 B1

FIGUR 3

EP 1 825 291 B1

RRC003

FIGUR 4A

FIGUR 4B

Attenuation 0dB: Wendepunkt, Burst RRC003 Peakthresh1/2

FIGUR 4C

Attenuation 0dB: Maximum, Burst RRC003 Peakthresh1/2

FIGUR 4D

FIGUR 4E

FIGUR 4F

RRC024

FIGUR 5A

FIGUR 5B

Attenuation 6dB: Wendepunkt, Burst RRC024 Peakthresh1/2

FIGUR 5C

Attenuation 6dB: Maximum, Burst RRC024 Peakthresh1/2

FIGUR 5D

FIGUR 5E

FIGUR 5F

RRC10

FIGUR 6A

FIGUR 6B

**FIGUR 6C**

**FIGUR 6D**

**FIGUR 6E**

**FIGUR 6F**

Gauss054

Attenuation 0dB: Wendepunkt, Burst Gauss054 Peakthresh1/2

- - - - Phase 0
——— Phases 30:30:180

FIGUR 7A

Attenuation 0dB: Maximum, Burst Gauss054 Peakthresh1/2

- - - - Phase 0
——— Phasen 30:30:180

FIGUR 7B

**FIGUR 7C**

**FIGUR 7D**

Attenuation 10dB: Wendepunkt, Burst Gauss054 Peakthresh1/2

FIGUR 7E

Attenuation 10dB: Maximum, Burst Gauss054 Peakthresh1/2

FIGUR 7F

(1) 1 B_cycle_48

(2) 1 B_cycle

(3) GESAMTVERZÖGERUNG BEI DER A-BURST-ERZEUGUNG

(4) VERZÖGERUNG DURCH PIPELINING USW.

(5) KUMULIERTE FILTER-GRUPPENLAUFZEITEN (=KUMULIERTE EINSCHWINGZEITEN)

(6) LÄNGE a_burstlen (IN B_cycles_48) DES ZUGRUNDELIEGENDEN UND DES
    RELEVANTEN A-BURSTS, WIE ER IM FOLGENDEN BETRACHTET WIRD

(7) KUMULIERTE AUSSCHWINGZEITEN DER FILTER

(8) LÄNGE DES ERZEUGTEN A-BURSTS IN B_samples

# FIGUR 8

(1) a_burstmaxlen      (5) at_dist

(2) a_burstlen         (6) t_burstperiod

(3) t_burstmaxlen      (7) ta_dist

(4) t_burstlen         (8) a_burstperiod

(9) a_initdel

# FIGUR 9

EP 1 825 291 B1

| Name | Type | Owner | Date |
|---|---|---|---|
| a_burstperiod | Var | blg | 27.9.03 |
| Description | | | |
| Abstand zwischen den Beginnen zweier aufeinanderfolgender A-Bursts, d.h. Dauer einer Akquisitions-Periode | | | |
| Interacts with | | Subscribers | |
| Akquisitions-Algorithmus | | std | |

| Value | Unit | State/Min | Max | Quant |
|---|---|---|---|---|
| | S_cycles | 1 | 16777215 | 1 |

| Comment |
|---|
| - muss erfüllen: a_burstperiod = at_multipl_len * t_burstperiod<br><br>- min. 1 A-Burst/s, max. 100 |

## FIGUR 10A

| Name | Type | Owner | Date |
|---|---|---|---|
| a_initdel | Var | blg | 1.10.03 |
| Description | | | |
| Abstand von der Triggerung für die Erzeugung des A-Bursts zum ersten erzeugten B_sample des relevanten A_Bursts | | | |
| Interacts with | | Subscribers | |
| Zusammenspiel Akquisitions- und Tracking-Algo | | std, shn, koe, fhf | |

| Value | Unit | State/Min | Max | Quant |
|---|---|---|---|---|
| | B_cycles | 0 | 15 | 1 |

| Comment |
|---|
| |

## FIGUR 10B

| Name | Type | Owner | Date |
|---|---|---|---|
| a_maximpwiden | Const | blg | 9.1.04 |

| Description | | | |
|---|---|---|---|
| max. kumulierte Impulsverbreiterung aller dispersiven Filter im Sender für den A-Bursts bzgl. einem B_sample_48-Impuls | | | |

| Interacts with | Subscribers |
|---|---|
| Zeit-Multiplex-Schema, Empfänger | std, shn, koe |

| Value | Unit | State/Min | Max | Quant |
|---|---|---|---|---|
| TBD??? | B_sample | | | |

| Comment |
|---|
| am Besten einen Wert nehmen, wie wir ihn für den implementierten Minisender haben und darauf noch ein bisschen Implementierungsmargin für zukünftige Sender setzen |

# FIGUR 10C

| Name | Type | Owner | Date |
|---|---|---|---|
| ant_choice_mask | Var | blg | 27.9.03 |

| Description | | | |
|---|---|---|---|
| Bit-Maske zur Auswahl zwischen den beiden Sende-Antennen | | | |

| Interacts with | Subscribers |
|---|---|
| Sender-HF-Teil | shn, olr |

| Value | Unit | State/Min | Max | Quant |
|---|---|---|---|---|
| | - | | | 2 Bits |

| Comment |
|---|
| - ant_choice_mask==00 (LSB rechts): sende stets auf Antenne 0 |
| - ant_choice_mask==01: beginne mit Antenne 0, wechsle nach jedem T-Burst |
| - ant_choice_mask==10: beginne mit Antenne 0, wechsle alle zwei T-Bursts |
| - ant_choice_mask==11: nicht erlaubt |

# FIGUR 10D

| Name | Type | Owner | Date |
|---|---|---|---|
| at_dist | Var | Blg | 27.9.03 |
| Description | | | |
| Abstand von der Triggerung für die Erzeugung des A-Bursts zum Beginn des nachfolgenden T-Bursts | | | |
| Interacts with | | Subscribers | |
| Zusammenspiel Akquisitions- und Tracking-Algo | | std, shn, koe, fhf | |

| Value | Unit | State/Min | Max | Quant |
|---|---|---|---|---|
| | S_cycles | 1 | 2047 | 1 |
| Comment | | | | |
| | | | | |

# FIGUR 10E

| Name | Type | Owner | Date |
|---|---|---|---|
| at_multipl_len | Var | blg | 27.9.03 |
| Description | | | |
| Anzahl T-Bursts zwischen zwei A-Bursts, d.h. innerhalb einer Akquisitions-Periode | | | |
| Interacts with | | Subscribers | |
| Kanalbelegung | | hfn, std, shn | |

| Value | Unit | State/Min | Max | Quant |
|---|---|---|---|---|
| | einheitenlos | 1 | 2047 | 1 |
| Comment | | | | |
| Gewünscht sind mindestens 10 A-Bursts pro Sekunde | | | | |

# FIGUR 10F

| Name | | Type | Owner | Date |
|---|---|---|---|---|
| B_clock | | Const | oehler | 24.9.03 |
| Description | | | | |
| Basis-Samplefrequenz für die digitale Signalverarbeitung im Sender (vor dem Interpolator-Filter preDACfilt vor dem DAC) und im Empfänger | | | | |
| Interacts with | | | Subscribers | |
| D_clock, Sender, gesamte Luftschnittstelle, Empfänger | | | rtk, blg, std, koe, fhf | |
| Value | Unit | State/Min | Max | Quant |
| | | Frozen | | |
| Comment | | | | |
| B_clock=D_clock/2 | | | | |

# FIGUR 10G

| Name | | Type | Owner | Date |
|---|---|---|---|---|
| carfreq | | Const | oehler | 24.9.03 |
| Description | | | | |
| Trägerfrequenz = Mittenfrequenz des HF-Signals | | | | |
| Interacts with | | | Subscribers | |
| t_burstbw | | | blg, koe | |
| Value | Unit | State/Min | Max | Quant |
| | | Frozen | | |
| Comment | | | | |
| | | | | |

# FIGUR 10H

| Name | | Type | Owner | Date |
|---|---|---|---|---|
| D_clock | | Const | oehler | 24.9.03 |
| Description | | | | |
| Samplefrequenz des DAC im Sender und des ADC im Empfänger | | | | |
| Interacts with | | | Subscribers | |
| B_clock | | | blg, hpj, koe | |
| Value | Unit | State/Min | Max | Quant |
| | | Frozen | | |
| Comment | | | | |
| | | | | |

# FIGUR 10I

| Name | | Type | Owner | Date |
|---|---|---|---|---|
| frame_len | | Const | blg | 1.10.03 |
| Description | | | | |
| Länge eines Frames für die Datenübertragung | | | | |
| Interacts with | | | Subscribers | |
| - | | | | |
| Value | Unit | State/Min | Max | Quant |
| | | Frozen | | 1 |
| Comment | | | | |
| muss Bedingung erfüllen: frame_len = (nodatabits+12)*2+12+11 | | | | |

# FIGUR 10J

| Name | Type | Owner | Date |
|---|---|---|---|
| halfburst1 | Var | blg | 1.10.03 |
| Description | | | |
| Erster Halbburst zur Erzeugung eines T-Bursts | | | |

| Interacts with | | Subscribers | |
|---|---|---|---|
| Sender, Empfänger | | - | |

| Value | Unit | State/Min | Max | Quant |
|---|---|---|---|---|
| | - | -1 | +1 | |

| Comment |
|---|
| - ist ein Vektor der Länge halfburstlen<br>- liegt in B_samples jeweils für I- und Q-Komponente vor<br>- ist optimal ausgesteuert, d.h. die extremen Werte -1 und +1 werden<br>  tatsächlich angenommen<br>- kann verschiedene effektive Leistungen besitzen |

# FIGUR 10K

| Name | Type | Owner | Date |
|---|---|---|---|
| halfburst2 | Var | blg | 1.10.03 |
| Description | | | |
| Zweiter Halbburst zur Erzeugung eines T-Bursts | | | |

| Interacts with | | Subscribers | |
|---|---|---|---|
| Sender, Empfänger | | - | |

| Value | Unit | State/Min | Max | Quant |
|---|---|---|---|---|
| | - | -1 | +1 | |

| Comment |
|---|
| - ist ein Vektor der Länge halfburstlen<br>- liegt in B_samples jeweils für I- und Q-Komponente vor<br>- ist optimal ausgesteuert, d.h. die extremen Werte -1 und +1 werden<br>  tatsächlich angenommen<br>- kann verschiedene effektive Leistungen besitzen |

# FIGUR 10L

| Name | Type | Owner | Date |
|---|---|---|---|
| **halfburstlen** | Var | blg | 1.10.03 |
| Description | | | |
| Länge der T-Halbbursts halfburst1 und halfburst2 | | | |

| Interacts with | | | Subscribers | |
|---|---|---|---|---|
| Sender, Empfänger | | | - | |

| Value | Unit | State/Min | Max | Quant |
|---|---|---|---|---|
| | B_samples | 100 | s.u. | 1 |

| Comment |
|---|
| muss die Bedingung erfüllen:<br>    halfburstlen < = (t_burstmaxlen + overlapmaxlen)/2 |

# FIGUR 10M

| Name | Type | Owner | Date |
|---|---|---|---|
| **ilvshift** | Const | blg | 1.10.03 |
| Description | | | |
| Indexverschiebung im Modulo-Interleaver | | | |

| Interacts with | | | Subscribers | |
|---|---|---|---|---|
| Sender | | | shn | |

| Value | Unit | State/Min | Max | Quant |
|---|---|---|---|---|
| 17 | - | Frozen | | 1 |

| Comment |
|---|
| Wichtige Bedingung: Muss relativ prim zu nocodebits gewählt werden, sonst werden nicht alle Bits des Interleavereingangs erreicht |

# FIGUR 10N

| Name | Type | Owner | Date |
|---|---|---|---|
| **maxfreqoffsppm** | Const | rtk | 24.9.03 |
| Description | | | |
| Max. relativer Frequenzversatz im Sender | | | |
| Interacts with | | Subscribers | |
| a_nopartcorrs, t_nopartcorrs | | std, blg | |

| Value | Unit | State/Min | Max | Quant |
|---|---|---|---|---|
| 30 | ppm | TBC | | |
| Comment | | | | |
| | | | | |

## FIGUR 10O

| Name | Type | Owner | Date |
|---|---|---|---|
| **nodatabits** | Const | rtk | 1.10.03 |
| Description | | | |
| Anzahl zu übertragender Nutzdatenbits pro Frame | | | |
| Interacts with | | Subscribers | |
| Sender, frame_len | | std, blg, shn | |

| Value | Unit | State/Min | Max | Quant |
|---|---|---|---|---|
| | | Frozen | | |
| Comment | | | | |
| | | | | |

## FIGUR 10P

| Name | | Type | Owner | Date |
|---|---|---|---|---|
| overlapmaxlen | | Const | blg | 1.10.03 |
| Description | | | | |
| Maximale Breite des Überlappungsbereiches der T-Halbbursts halfburst1 und halfburst2 | | | | |
| Interacts with | | | Subscribers | |
| Sender, Empfänger | | | shn | |
| Value | Unit | State/Min | Max | Quant |
| 32 | B_samples | | | |
| Comment | | | | |
| | | | | |

## FIGUR 10Q

| Name | | Type | Owner | Date |
|---|---|---|---|---|
| S_clock | | Const | shn | 24.9.03 |
| Description | | | | |
| Taktrate des Powermanagements (für den "Sleep"-Mode des Senders) | | | | |
| Interacts with | | | Subscribers | |
| Burst-Multiplex-Schema | | | blg, std, fhf | |
| Value | Unit | State/Min | Max | Quant |
| 10 | Mhz | Frozen | | |
| Comment | | | | |
| | | | | |

## FIGUR 10R

EP 1 825 291 B1

| Name | | Type | Owner | Date |
|---|---|---|---|---|
| senderSNIR | | Const | rtk | 29.9.03 |
| Description | | | | |
| Ziel-SNIR am Sender-Ausgang | | | | |
| Interacts with | | | Subscribers | |
| System-Design, Sender, Empfänger | | | blg, olr, shn, koe | |
| Value | Unit | State/Min | Max | Quant |
| 25 | dB | FROZEN | | |
| Comment | | | | |
| Soll vom Sender insgesamt eingehalten werden (inkl. Quantisierung, Intermodulationsprodukte usw.) | | | | |

# FIGUR 10S

| Name | | Type | Owner | Date |
|---|---|---|---|---|
| shift12 | | Var | blg | 1.10.03 |
| Description | | | | |
| Verzögerung des T-Halbbursts halfburst2 bezüglich halfburst1 | | | | |
| Interacts with | | | Subscribers | |
| Sender, Empfänger | | | - | |
| Value | Unit | State/Min | Max | Quant |
| | B_samples | 100 | s.u. | 1 |
| Comment | | | | |
| - muss die Bedingung erfüllen: shift12 + halfburstlen <= t_burstmaxlen<br>- muss die Bedingung erfüllen: halfburstlen - shift12 <= overlapmaxlen | | | | |

# FIGUR 10T

44

| Name | Type | Owner | Date |
|---|---|---|---|
| **t_burstbw** | Const | blg | 24.9.03 |
| Description | | | |
| Max. Bandbreite des T-Bursts | | | |
| Interacts with | | Subscribers | |
| preDACfilt, Sende- und Empfangsfilter, carfreq, Wahl der T-Bursts | | hpj, oehler, fba, std | |

| Value | Unit | State/Min | Max | Quant |
|---|---|---|---|---|
| | | TBC | | |
| Comment | | | | |
| | | | | |

# FIGUR 10U

| Name | Type | Owner | Date |
|---|---|---|---|
| **t_burstlen** | Var | blg | 29.9.03 |
| Description | | | |
| Länge eines T-Bursts | | | |
| Interacts with | | Subscribers | |
| - | | - | |

| Value | Unit | State/Min | Max | Quant |
|---|---|---|---|---|
| - | B_cycles | | t_burstmaxlen | 1 |
| Comment | | | | |
| | | | | |

# FIGUR 10V

| Name | Type | Owner | Date |
|------|------|-------|------|
| t_burstmaxlen | Const | blg | 29.9.03 |

| Description | | | |
|------|------|------|------|
| Max. Länge der T-Bursts | | | |

| Interacts with | | Subscribers | | |
|------|------|------|------|------|
| T-Burst-Erzeugung im Sender, Struktur des Tracking-Algos im Empfänger | | bur, koe, std | | |

| Value | Unit | State/Min | Max | Quant |
|-------|------|-----------|-----|-------|
|  |  | Frozen |  |  |

| Comment | | | | |
|------|------|------|------|------|
| muss ein Vielfaches von 8 sein | | | | |

## FIGUR 10W

| Name | Type | Owner | Date |
|------|------|-------|------|
| t_burstperiod | Var | blg | 27.9.03 |

| Description | | | |
|------|------|------|------|
| Abstand zwischen den Beginnen zweier aufeinanderfolgender T-Bursts | | | |

| Interacts with | | Subscribers | | |
|------|------|------|------|------|
| Tracking-Algorithmus | | shn, koe, fhf | | |

| Value | Unit | State/Min | Max | Quant |
|-------|------|-----------|-----|-------|
|  | S_cycles | 1 | 131071 | 1 |

| Comment | | | | |
|------|------|------|------|------|
| minimal 90 T-Bursts/s, max. 2200 | | | | |

## FIGUR 10X

| Name | Type | Owner | Date |
|---|---|---|---|
| t_choice_mask | Var | blg | 27.9.03 |
| Description | | | |
| Bit-Maske zur Auswahl zwischen den beiden gespeicherten T-Bursts | | | |
| Interacts with | | Subscribers | |
| Tracking-Algorithmus | | shn, fhf, koe | |

| Value | Unit | State/Min | Max | Quant |
|---|---|---|---|---|
| | – | | | 2 Bits |

| Comment |
|---|
| - t_choice_mask==00 (LSB rechts): sende stets T-Burst 0 <br> - t_choice_mask==01: beginne mit T-Burst 0, wechsle nach jedem T-Burst <br> - t_choice_mask==10: beginne mit T-burst 0, wechsle alle zwei T-Bursts <br> - t_choice_mask==11: nicht erlaubt |

# FIGUR 10Y

| Name | Type | Owner | Date |
|---|---|---|---|
| t0_sendburst | Var | blg | 29.9.03 |
| Description | | | |
| Zero-padded T-Burst 0 im Sender | | | |
| Interacts with | | Subscribers | |
| – | | bur | |

| Value | Unit | State/Min | Max | Quant |
|---|---|---|---|---|
| | – | -31 | +31 | 6-bit |

| Comment |
|---|
| - Vektor aus I- und Q-Samples mit Länge t0_sendburstlen (in I/Q-Sample-Paaren) <br> - Zero-Padding s.o. |

# FIGUR 10Z

| Name | Type | Owner | Date |
|---|---|---|---|
| t1_sendburst | Var | blg | 29.9.03 |

| Description | | | | |
|---|---|---|---|---|
| Zero-padded T-Burst 1 im Sender | | | | |

| Interacts with | | | Subscribers | |
|---|---|---|---|---|
| - | | | bur | |

| Value | Unit | State/Min | Max | Quant |
|---|---|---|---|---|
| | - | -31 | +31 | 6-bit |

| Comment |
|---|
| - Vektor aus I- und Q-Samples mit Länge t1_sendburstlen (in I/Q-Sample-Paaren)<br>- Zero-Padding s.o. |

# FIGUR 10AA

| Name | Type | Owner | Date |
|---|---|---|---|
| t_sendburstlen | Var | blg | 29.9.03 |

| Description | | | | |
|---|---|---|---|---|
| Länge der zero-padded T-Bursts 0 und 1 im Sender | | | | |

| Interacts with | | | Subscribers | |
|---|---|---|---|---|
| - | | | bur | |

| Value | Unit | State/Min | Max | Quant |
|---|---|---|---|---|
| | B_samples | 32 | t_burstmaxlen | 8 |

| Comment |
|---|
| muss ein Vielfaches von 8 sein |

# FIGUR 10AB

| Name | Type | Owner | Date |
|------|------|-------|------|
| t0_startpadlen | Var | blg | 29.9.03 |
| Description | | | |
| Länge des Zero-Paddings am Start von t0_sendburst | | | |
| Interacts with | | Subscribers | |
| T-Algo | | koe | |

| Value | Unit | State/Min | Max | Quant |
|-------|------|-----------|-----|-------|
| | B_samples | 0 | ca. 15 | 1 |
| Comment | | | | |
| t0_startpadlen = ceil((t_sendburstlen - t0_burstlen)/2) | | | | |

# FIGUR 10AC

| Name | Type | Owner | Date |
|------|------|-------|------|
| t1_startpadlen | Var | blg | 29.9.03 |
| Description | | | |
| Länge des Zero-Paddings am Start von t1_sendburst | | | |
| Interacts with | | Subscribers | |
| T-Algo | | koe | |

| Value | Unit | State/Min | Max | Quant |
|-------|------|-----------|-----|-------|
| | B_samples | 0 | ca. 15 | 1 |
| Comment | | | | |
| t1_startpadlen = ceil((t_sendburstlen - t1_burstlen)/2) | | | | |

# FIGUR 10AD

| Name | Type | Owner | Date |
|---|---|---|---|
| ta_dist | Var | blg | 27.9.03 |
| Description | | | |
| Abstand zwischen dem letzten T-Burst einer Akquisitions-Periode und der Triggerung zur Erzeugung des nachfolgenden A-Bursts | | | |

| Interacts with | | | Subscribers | | |
|---|---|---|---|---|---|
| Tracking-Algorithmus | | | shn, koe, fhf | | |
| Value | Unit | State/Min | Max | Quant | |
| | S_cycles | 1 | 131071 | 1 | |

| Comment |
|---|
| muss erfüllen: ta_dist + at_dist = t_burstperiod |

# FIGUR 10AE

| Name | Type | Owner | Date |
|---|---|---|---|
| two_ants | Var | blg | 27.9.03 |
| Description | | | |
| Bit zur gleichzeitigen Auswahl beider Sende-Antennen im Sender | | | |

| Interacts with | | | Subscribers | | |
|---|---|---|---|---|---|
| Sender-HF-Teil | | | shn, olr | | |
| Value | Unit | State/Min | Max | Quant | |
| | - | | | 1 Bit | |

| Comment |
|---|
| - two_ants= =0: verwende die Bit-Maske ant_choice_mask zur Auswahl der Sende-Antenne<br>- two_ants= =1: sende stets auf beiden Sende-Antennen |

# FIGUR 10AF

1100

1102

EMPFANGSFOLGEN
1110, 1112

EMPFÄNGER

1104

EMPFANGENE
EMPFANGSFOLGEN

SENDEFOLGEN
1140, 1142

KORRELATOR

QUALITÄTSWERTE
1130, 1132

EINTREFFZEITPUNKTE
1120, 1122

KOMBINIERER

1106

GEMITTELTER
EINTREFFZEITPUNKT
1125

FIGUR 11

EP 1 825 291 B1

200

SENDE-
VOR-
RICHTUNG

SENDE-
FOLGEN
240, 242

EMPFANGS-
FOLGEN
1110, 1112

1100a

ERSTE
EMPFANGS-
VORRICHTUNG

ERSTER GEMITTELTER
EINTREFFZEITPUNKT
1125a

EMPFANGS-
FOLGEN
1110, 1112

ZWEITE
EMPFANGS-
VORRICHTUNG

ZWEITER GEMITTELTER
EINTREFFZEITPUNKT
1125b

1100b

AUSWERTE-
EINRICHTUNG

STANDORT DES
SENDERS
1474

1472

FIGUR 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20030128161 A1
- US 6009334 A

- US 2003227895 A1
- US 2004072579 A1

### In der Beschreibung aufgeführte Nicht-Patentliteratur

- Super-Resolution TOA Estimation with Diversity for Indoor Geolocation. **LI X et al.** IEEE Transactions on Wireless Communications. IEEE Service Center, Januar 2004, vol. 3, 224-234